# FASCICULE DE BREVET EUROPEEN

(11) **EP 1 569 970 B1**
(45) Date de publication et mention de la délivrance du brevet: **02.11.2011**
(21) Numéro de dépôt: 03769789.3
(22) Date de dépôt: 07.11.2003
(51) Int. Cl.: C08F 220/32

(54) **COPOLYMERE DISPOSANT D'AU MOINS UNE FONCTION GREFFEE ALKOXY OU HYDROXY POLYALKYLENE GLYCOL ET SON UTILISATION**
MIT ALKOXY ODER HYDROXY POLYALKYLENE GLYCOL GEPROPFTE COPOLYMERE UND IHRE VERWENDUNG
COPOLYMER HAVING AT LEAST ONE ALKOXY- OR HYDROXY-POLYALKYLENE GLYCOL GRAFTED FUNCTION, AND USE THEREOF

(30) Priorité: 08.11.2002 FR 0213999
(43) Date de publication de la demande: 07.09.2005
(60) Demande divisionnaire: 10011527.8
(73) Titulaire: OMYA DEVELOPMENT AG, 4665 Oftringen (CH)
(72) Inventeur: GANE, Patrick, CH-4852 Rothrist (CH); BURI, Matthias, CH-4852 Rothrist (CH); KAESSBERGER, Michael, CH-6204 Sempach (CH)
(74) Mandataire: Richebourg, Michel François
(86) Numéro de dépôt international: PCT/IB2003/005082
(87) Numéro de publication internationale: WO 2004/041883

(56) Documents cités:
- FR-A- 2 766 107
- FR-A- 2 810 261
- D. HOURDET, F. L'ALLORET, R. AUDEBERT: "Synthesis of thermoassociative copolymers" POLYMER, vol. 38, no. 10, 1997, pages 2535-2547, XP004059755
- M. TRICOT: "Comparison of experimental and theoretical persistence length of some polyelectrolytes at various ionic strength" MACROMOLECULES, vol. 17, no. 9, 1984, pages 1698-1704, XP002267215

## Description

La présente invention concerne le secteur technique des suspensions de matières minérales, et avant et/ou après séchage leurs applications dans les domaines du papier, de la peinture et après séchage des matières plastiques et plus particulièrement dans leurs applications papetières, comme notamment le domaine des sauces de couchage papetières, en vue d'apporter une amélioration de la brillance et notamment de la brillance au niveau de la feuille de papier.

L'invention concerne tout d'abord l'utilisation d'un copolymère hydrosoluble et de préférence faiblement ionique et hydrosoluble disposant d'au moins une fonction alkoxy ou hydroxy polyalkylène glycol greffée sur au moins un monomère insaturé éthylénique, comme agent améliorant la brillance du produit final et notamment la brillance au niveau de la feuille de papier, quel que soit l'angle de vision, c'est-à-dire un angle compris entre 20° et 85°, et plus particulièrement entre 45° et 75°.

L'invention concerne aussi l'agent améliorant la brillance du produit final, quel que soit l'angle de vision, c'est-à-dire un angle compris entre 20° et 85°, et plus particulièrement entre 45° et 75°.

L'invention concerne également l'utilisation d'un copolymère hydrosoluble et de préférence faiblement ionique et hydrosoluble disposant d'au moins une fonction alkoxy ou hydroxy polyalkylène glycol greffée sur au moins un monomère insaturé éthylénique, comme agent améliorant la brillance du produit final, et notamment la brillance au niveau de la feuille de papier quel que soit l'angle de vision, c'est-à-dire un angle compris entre 20° et 85°, et plus particulièrement entre 45° et 75°, et sa mise en oeuvre dans un procédé de dispersion de pigments et/ou de charges minérales en suspension aqueuse. Elle concerne également le procédé de dispersion mettant en oeuvre ledit copolymère ainsi que les suspensions aqueuses ainsi obtenues. L'invention concerne également l'utilisation d'un copolymère hydrosoluble et de préférence faiblement ionique et hydrosoluble disposant d'au moins une fonction alkoxy ou hydroxy polyalkylène glycol greffée sur au moins un monomère insaturé éthylénique, comme agent améliorant la brillance du produit final, et notamment la brillance au niveau de la feuille de papier quel que soit l'angle de vision, c'est-à-dire un angle compris entre 20° et 85°, et plus particulièrement entre 45° et 75°, et sa mise en oeuvre dans un procédé de broyage de pigments et/ou de charges minérales en suspension aqueuse. Elle concerne également le procédé de broyage mettant en oeuvre ledit copolymère ainsi que les suspensions aqueuses ainsi obtenues.

Elle concerne aussi l'utilisation desdites suspensions aqueuses pour la fabrication des sauces de couchage. Elle concerne également le procédé de fabrication des sauces de couchage mettant en oeuvre ledit copolymère ainsi que les sauces de couchage ainsi obtenues.

Elle concerne enfin l'utilisation desdites sauces de couchage pour le couchage des papiers. Elle concerne également les papiers ainsi obtenus.

L'invention concerne également l'utilisation d'un copolymère hydrosoluble et de préférence faiblement ionique et hydrosoluble disposant d'au moins une fonction alkoxy ou hydroxy polyalkylène glycol greffée sur au moins un monomère insaturé éthylénique, comme agent améliorant la brillance du produit final, et notamment la brillance au niveau de la feuille de papier quel que soit l'angle de vision, c'est-à-dire un angle compris entre 20° et 85°, et plus particulièrement entre 45° et 75°, et sa mise en oeuvre dans un procédé de fabrication de sauces de couchage. Elle concerne également les sauces de couchage ainsi obtenues.

Elle concerne aussi l'utilisation des sauces de couchage ainsi obtenues pour le couchage des papiers. Elle concerne enfin les papiers ainsi obtenus.

L'invention concerne enfin l'utilisation d'un copolymère hydrosoluble et de préférence faiblement ionique et hydrosoluble disposant d'au moins une fonction greffée alkoxy ou hydroxy polyalkylène glycol greffée sur au moins un monomère insaturé éthylénique, comme agent améliorant la brillance dans le domaine de la peinture et des matières plastiques.

Le procédé de fabrication d'un papier comprend plusieurs étapes dont : mise en suspension aqueuse des pigments et/ou des charges minérales ; utilisation desdites suspensions pour fabriquer des charges de masse et/ou des sauces de couchage ; utilisation desdites sauces et desdites charges de masse pour fabriquer et/ou coucher les papiers. Tout au long de ce procédé, l'homme du métier conserve à l'esprit la nécessité d'obtenir un produit final présentant une forte activation de la brillance; l'accroissement de la brillance au niveau de la feuille de papier est en effet une des préoccupations majeures pour les papetiers. Cette propriété d'activation de la brillance au niveau de la feuille de papier, ainsi que les moyens connus pour améliorer celle-ci au cours du procédé précédemment décrit, sont illustrés par la suite à travers les documents accessibles à l'homme du métier dans l'art antérieur.

Au cours dudit procédé, les charges minérales et/ou les pigments, tels que le carbonate de calcium, les dolomies, l'hydroxyde de magnésium, le kaolin, le talc, le gypse, l'oxyde de titane, le blanc satin ou encore le trihydroxyde d'aluminium, sont initialement mis en suspension aqueuse. Pour ce faire, on utilise des agents de dispersion et/ou d'aide au broyage de ces pigments et/ou charges minérales encore appelées matières minérales.

Il est à noter que dans toute la description, on parlera aussi bien de matières minérales que de charges et/ou pigments, ces termes ayant la même signification pour la Demanderesse.

Ces agents de dispersion et/ou d'aide au broyage se comportent comme des modificateurs de rhéologie au sens où ils fluidifient les dites suspensions. L'action mécanique du broyage, facilitée par l'emploi des agents d'aide au broyage, apporte en plus un effet de réduction de la taille des particules. On peut également utiliser des additifs permettant de réguler la viscosité desdites suspensions de matières minérales. Ainsi, l'homme du métier connaît le document EP 0 610 534 qui enseigne la préparation de polymères obtenus par copolymérisation d'un monomère isocyanate et de monomères aprotiques, puis par fonctionnalisation au moyen d'amines ou d'éthers monoalkylés de polyalkylènes glycol. De tels agents sont particulièrement efficaces pour le broyage de pigments organiques.

De même, il connaît le document WO 00/77058 qui décrit des copolymères à base d'un dérivé insaturé d'un acide mono ou di carboxylique, d'éther de l'oxyalkylène glycol, de polyalkylène glycol vinylique, d'un composé polysiloxane ou d'un ester. Ces copolymères sont utilisés comme agents dispersants dans les suspensions de charges minérales, notamment dans le secteur des ciments.

Il connaît également le document WO 01/96007 qui décrit un copolymère ionique, hydrosoluble, et disposant d'une fonction greffée alkoxy polyalkylène glycol, dont le rôle est de disperser et/ou d'aider au broyage des pigments et/ou des charges minérales.

De même, l'homme du métier connaît aussi le document FR 2 707 182 qui lui enseigne d'utiliser une composition polymérique à base de sels d'acide polyacrylique et de phosphonates, pour fluidifier des suspensions de pigments inorganiques.

D'autre part, le document WO 94/24202 propose des latex insolubles dans l'eau pour compositions de couchage mais ceux-ci ne permettent pas d'atteindre des valeurs de brillance élevées quel que soit l'angle de vision, c'est-à-dire un angle compris entre 20° et 85°, et plus particulièrement entre 45° et 75°.

Néanmoins, ce document, pas plus que les autres apparaissant dans l'art antérieur, n'enseignent que le greffage d'un groupement alkoxy ou hydroxy polyalkylène glycol améliore la brillance au niveau de la feuille de papier quel que soit l'angle de vision, c'est-à-dire un angle compris entre 20° et 85°, et plus particulièrement entre 45° et 75°.

Lesdites suspensions aqueuses de pigments et/ou de charges minérales entrent ensuite dans la composition des sauces de couchage.

Poursuivant ses recherches en vue d'augmenter la brillance, notamment de la brillance de la feuille de papier, la Demanderesse a trouvé de manière surprenante, que l'utilisation dans des procédés de broyage de matières minérales, des procédés de dispersion de matières minérales, des procédés de fabrication de sauces de couchage, d'un copolymère hydrosoluble et de préférence faiblement ionique et hydrosoluble disposant d'au moins une fonction alkoxy ou hydroxy polyalkylène glycol greffée sur au moins un monomère éthylénique insaturé, et ayant une viscosité intrinsèque inférieure ou égale à 100 ml/g déterminée selon la méthode détaillée dans la suite de la description et dite « méthode de visco. intrinsèque », permet d'obtenir une augmentation de la brillance, notamment de la brillance de la feuille de papier, quel que soit l'angle de vision, c'est-à-dire un angle compris entre 20° et 85°, et plus particulièrement entre 45° et 75°.

Ainsi l'utilisation selon l'invention d'un copolymère faiblement ionique et hydrosoluble comme activateur de la brillance, notamment de la brillance de la feuille de papier, quel que soit l'angle de vision, c'est-à-dire un angle compris entre 20° et 85°, et plus particulièrement entre 45° et 75° se caractérise en ce que le copolymère dispose d'au moins une fonction alkoxy ou hydroxy polyalkylène glycol greffée sur au moins un monomère éthylénique insaturé, et en ce que ledit copolymère a une viscosité intrinsèque inférieure ou égale à 100 ml/g déterminée selon la méthode dite « méthode de visco. intrinsèque ».

La viscosité intrinsèque du copolymère est déterminée selon la méthode décrite dans la publication Vollmert « Outlines of macromolecular chemistry » volume III, Vollmert Verlag, Karlsruhe 1985 et par mise en oeuvre d'une solution d'eau bipermutée et d'un tube capillaire défini par la norme DIN 53101/0a, de constante 0,005 et de diamètre égal à 0,53 mm. Cette méthode sera appelée dans la présente demande « méthode de visco. intrinsèque ».

Une deuxième méthode de détermination de la viscosité intrinsèque pouvant être utilisée met en oeuvre une solution de NaCl à 6 % et le même matériel que celui précédemment décrit.

Dans les exemples où cette deuxième méthode est utilisée en plus de la première, les valeurs de viscosité intrinsèque obtenues par cette seconde méthode correspondent à la seconde valeur indiquée.

De manière plus particulière, la Demanderesse a trouvé que la présence dans ledit copolymère d'au moins un monomère de formule (I) : 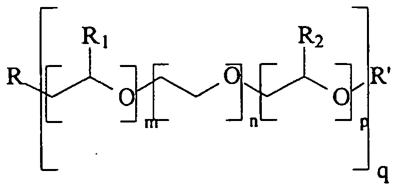 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre au moins égal à 1 et tel que 5 ≤ (m+n+p)q ≤ 150,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone,
- R' représente l'hydrogène ou un radical hydrocarboné ayant 1 à 40 atomes de carbone,
   a permis la mise au point de copolymères faiblement ionique et hydrosoluble comportant au moins une fonction alkoxy ou hydroxy polyalkylène glycol greffée sur au moins un monomère éthylénique insaturé, qui conduit à une amélioration de la brillance, notamment de la brillance de la feuille de papier, quel que soit l'angle de vision, c'est-à-dire un angle compris entre 20° et 85°, et plus particulièrement entre 45° et 75°.

Ainsi, selon l'invention, ledit copolymère faiblement ionique et hydrosoluble se compose :
a) d'au moins un monomère anionique et à fonction carboxylique ou dicarboxylique ou phosphorique ou phosphonique ou sulfonique ou leur mélange,
b) d'au moins un monomère non ionique, le monomère non ionique étant constitué d'au moins un monomère de formule (I) : 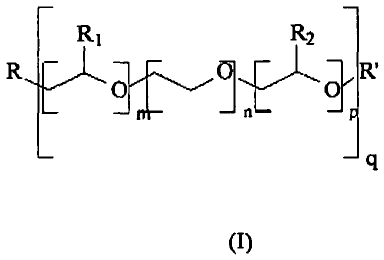 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,
      ou du mélange de plusieurs monomères de formule (I),
le total des proportions des constituants a), b) étant égal à 100 %, et a une viscosité intrinsèque inférieure ou égale à 100 ml/g déterminée selon la méthode dite « méthode de visco. intrinsèque ».

Ledit copolymère a conduit à une amélioration de la brillance et notamment de la brillance des papiers, quel que soit l'angle de vision, c'est-à-dire un angle compris entre 20° et 85°, et plus particulièrement entre 45° et 75°.

Ce but est atteint grâce à l'utilisation d'un copolymère faiblement ionique et hydrosoluble constitué :
a) d'au moins un monomère anionique à insaturation éthylénique et à fonction monocarboxylique, ou dicarboxylique, ou sulfonique, ou phosphorique, ou phosphonique ou leur mélange,
b) d'au moins un monomère non ionique de formule (I),

le total des proportions des constituants a), b), étant égal à 100 %.

L'utilisation, selon l'invention, d'un copolymère faiblement ionique, hydrosoluble, et disposant d'au moins une fonction alkoxy ou hydroxy polyalkylène glycol greffée sur au moins un monomère éthylénique insaturé conduisant à une augmentation de la brillance quel que soit l'angle de vision, c'est-à.-dire un angle compris entre 20° et 85°, et plus particulièrement entre 45° et 75° et notamment de la brillance de la feuille de papier, se caractérise en ce que ledit copolymère faiblement ionique et hydrosoluble est constitué :
a) d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,
b) d'au moins un monomère à insaturation éthylénique non ionique de formule (I) : 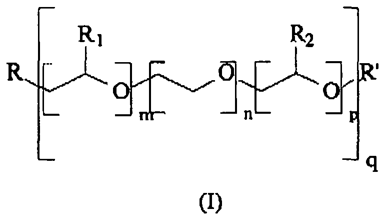 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n-+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
   le total des proportions des constituants a), b) étant égal à 100 %,
   et en ce que ledit copolymère a une viscosité intrinsèque inférieure ou égale à 100 ml/g déterminée selon la méthode dite « méthode de visco. intrinsèque »,

Plus particulièrement l'utilisation du copolymère précité est caractérisée en ce que ledit copolymère est constitué, exprimé en poids ;
a) de 2 % à 95 % et encore plus particulièrement de 5 % à 90 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,
b) de 2 à 95 % et encore plus particulièrement de 5 % à 90 % d'au moins un monomère à insaturation éthylénique non ionique de formule (I) : 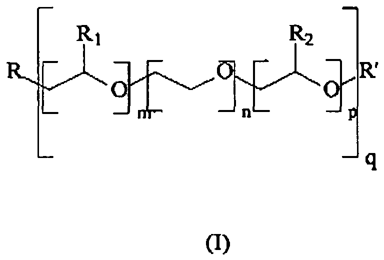 dans laquelle :
   - m et p représentent un nombre de motifs d'oxyde d'alkylène inférieur ou égal à 150,
   - n représente un nombre de motifs d'oxyde d'éthylène inférieur ou égal à 150,
   - q représente un nombre entier au moins égal à 1 et tel que 5 ≤ (m+n+p)q ≤ 150, et préférentiellement tel que 15 ≤ (m+n+p)q ≤ 120,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
le total des proportions des constituants a), b) étant égal à 100 %,
et en ce que ledit copolymère a une viscosité intrinsèque inférieure ou égale à 100 ml/g déterminée selon la méthode dite « méthode de visco. intrinsèque ».

Le copolymère hydrosoluble et de préférence faiblement ionique et hydrosoluble utilisé selon l'invention est obtenu par des procédés connus de copolymérisation radicalaire en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Reversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

En fin de polymérisation ce copolymère peut éventuellement être distillé, et ses fonctions carboxyliques peuvent être partiellement ou totalement neutralisées par un ou plusieurs agents de neutralisation disposant d'une fonction neutralisante monovalente ou d'une fonction neutralisante polyvalente tels que par exemple pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine, l'amino méthyl propanol, la morpholine ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

Chaque agent de neutralisation intervient alors selon des taux de neutralisation propres à chaque fonction de valence.

Selon une autre variante, le copolymère issu de la réaction de copolymérisation peut éventuellement avant ou après la réaction de neutralisation totale ou partielle, être traité et séparé en plusieurs phases, selon des procédés statiques ou dynamiques connus de l'homme du l'art, par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges.

L'invention concerne aussi ledit copolymère faiblement ionique et hydrosoluble disposant d'au moins une fonction alkoxy ou hydroxy polyalkylène glycol greffée sur au moins un monomère éthylénique insaturé permettant l'amélioration de la brillance des papiers, des peintures et des plastiques.

Ainsi selon l'invention l'activateur de brillance quel que soit l'angle de vision, c'est-à-dire un angle compris entre 20° et 85°, et plus particulièrement entre 45° et 75° est caractérisé en ce qu'il est le copolymère hydrosoluble, préférentiellement faiblement ionique et hydrosoluble précité.

L'invention concerne aussi le procédé de dispersion mettant en oeuvre ledit copolymère.

Ce procédé de dispersion selon l'invention se caractérise en ce que l'on utilise ledit copolymère, et de manière particulière en ce qu'on utilise de 0,05 % à 5 % en poids sec dudit copolymère par rapport au poids sec des charges et/ou pigments, et plus particulièrement en ce qu'on utilise de 0,1 % à 2,5 % en poids sec dudit copolymère par rapport au poids sec des charges et/ou pigments.

Ce procédé de dispersion en suspension aqueuse de matières minérales selon l'invention est caractérisé en ce que la matière minérale est choisie parmi le carbonate de calcium, les dolomies, le kaolin, le kaolin calciné, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est plus particulièrement du carbonate de calcium tel que le carbonate de calcium naturel choisi parmi le marbre, la calcite, la craie ou leurs mélanges.

L'invention concerne aussi le procédé de broyage mettant en oeuvre ledit copolymère.

Ce procédé de broyage en suspension aqueuse de matières minérales selon l'invention se caractérise en ce que l'on utilise ledit copolymère, et de manière particulière en ce qu'on utilise de 0,05 % à 5 % en poids sec dudit copolymère par rapport au poids sec des charges et/ou pigments, et plus particulièrement en ce qu'on utilise de 0,1 % à 2,5 % en poids sec dudit copolymère par rapport au poids sec des charges et/ou pigments.

Ce procédé de broyage en suspension aqueuse de matières minérales selon l'invention est caractérisé en ce que la matière minérale est choisie parmi le carbonate de calcium, les dolomies, le kaolin, le kaolin calciné, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est plus particulièrement du carbonate de calcium tel que le carbonate de calcium naturel choisi parmi le marbre, la calcite, la craie ou leurs mélanges.

Les suspensions aqueuses de charges et/ou pigments dispersées et/ou broyées selon l'invention, se caractérisent en ce qu'elles contiennent ledit copolymère et plus particulièrement en ce qu'elles contiennent de 0,05 % à 5 % en poids sec dudit copolymère par rapport au poids sec total des charges et/ou pigments, et encore plus particulièrement 0,1 % à 2,5 % en poids sec dudit agent par rapport au poids sec total des charges et/ou pigments.

Elles se caractérisent également en ce que la matière minérale est choisie parmi le carbonate de calcium, les dolomies, le kaolin, le kaolin calciné, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est plus particulièrement du carbonate de calcium tel que le carbonate de calcium naturel choisi parmi le marbre, la calcite, la craie ou leurs mélanges.

L'invention concerne également l'utilisation desdites suspensions aqueuses de matière minérale selon l'invention dans le domaine papetier et plus précisément dans le couchage du papier.

Les sauces de couchage selon l'invention se caractérisent en ce qu'elles contiennent ledit copolymère et plus particulièrement en ce qu'elles contiennent de 0,05 % à 5 % en poids sec dudit copolymère par rapport au poids sec total des charges et/ou pigments, et encore plus particulièrement 0,1 % à 2,5 % en poids sec dudit copolymère par rapport au poids sec total des charges et/ou pigments.

Les papiers couchés selon l'invention se caractérisent en ce qu'ils contiennent ledit copolymère.

Il est à noter qu'un pigment brillant en couchage peut être utilisé comme pigment en charge de masse avec une moindre influence sur la rétention des charges qu'un pigment de même finesse mais dispersé avec un polyacrylate.

Les compositions de peinture et de matière plastique selon l'invention se caractérisent en ce qu'elles contiennent ledit copolymère.

La portée et l'intérêt de l'invention seront mieux perçus grâce aux exemples suivants qui ne sauraient être limitatifs.

### Exemple 1

Cet exemple concerne l'utilisation de copolymères selon l'invention dans un procédé de broyage de charges minérales. Il concerne également l'utilisation des suspensions ainsi obtenues dans la fabrication de sauces de couchage papetières, ces dites sauces étant utilisées pour coucher des papiers. Cet exemple concerne aussi la mesure de la brillance des papiers obtenus.

Dans cet exemple pour les essais n° 1 et 2, le papier support utilisé est un papier précouché avec un carbonate de calcium commercialisé par la société Omya sous le nom Covercarb™ 60ME.

Ce papier support présente les caractéristiques suivantes :
- un poids spécifique égal à 82 g/m² mesuré selon la norme 1301 ISO 536
- une blancheur R_{457 + UV} égale à 96 % mesurée selon la norme ISO 2470
- une blancheur R_{457 - UV} égale à 87 % mesurée selon la norme ISO 2470
- une opacité égale à 89,5 % mesurée selon la norme DIN 53 146
- une rugosité égale à 4,8 µm mesurée selon la norme ISO 8791-4

### Essai n° 1

Cet essai illustre l'art antérieur et met en oeuvre une suspension de carbonate de calcium broyée avec 0,9 % en poids sec, par rapport au poids sec de carbonate de calcium, d'un polyacrylate de sodium et de magnésium de viscosité intrinsèque égale à 7,8 ml/g selon la méthode de visco. intrinsèque précitée, et de granulométrie telle que 97 % en poids des particules ont un diamètre inférieur à 2 µm et 81 % en poids des particules ont un diamètre inférieur à 1 µm mesurée au Sédigraph™ 5100.

Ce carbonate de calcium a une demande en polymère cationique PDDPC égale à 33990 µ Val/kg, cette demande en polymère cationique étant mesurée à l'aide du titrateur Mettler DL 77 et du détecteur Mütec PCD 02 par la méthode de titration cationique mettant en oeuvre 0,005 mole d'une solution de 20 % de chlorure de poly(N,N-dimethyl-3,5-diméthylène-piperidium (PDDPC) vendu par Acros Organics.

Ladite suspension entre ensuite dans la composition de la sauce de couchage à tester, composée de :
- 80 parts en sec de la suspension aqueuse de carbonate de calcium à tester,
- 5 parts en sec d'une suspension aqueuse de carbonate de calcium plus grossier,
- 15 parts de kaolin délaminé,
- 9,5 parts de liant,
- 0,32 parts de carboxyméthyl cellulose,
- 0,6 part d'alcool polyvinylique,
- 0,15 part d'azurant optique, et
- 0,4 part de stéarate de calcium.
et préparée à 68 % de concentration en matière sèche, comme suit.

On mélange, dans un récipient contenant 20 kg d'eau et 0,125 kg d'un polyacrylate de sodium de concentration en matière sèche égale à 42 % et de viscosité intrinsèque égale à 6,2 ml/g selon la méthode dite méthode de visco. intrinsèque précitée, 22,5 kg d'une suspension aqueuse, à 78,2 % de concentration en matière sèche, de carbonate de calcium plus grossier commercialisé par Omya sous la dénomination Hydrocarb™ 60 et 356,5 kg d'une suspension aqueuse, à 78,5 % de concentration en matière sèche, de la suspension de carbonate de calcium à tester.

Le mélange des carbonates de calcium effectué, on ajoute sous une vitesse d'agitation moyenne, 52,5 kg d'un kaolin délaminé commercialisée par Kaolin International B.V. sous la dénomination Amazon™ 88.

L'agitation est maintenue à vitesse moyenne pendant 15 minutes et après vérification visuelle de la présence ou non d'agglomérats, l'agitation est poursuivie jusqu'à la disparition des quelques agglomérats ou alors stoppée s'il n'y a pas d'agglomérats.

Il est alors ajouté 7,5 kg d'une solution aqueuse à 15 % de concentration, de carboxyméthyl cellulose précédemment dissoute pendant au moins 20 minutes à au moins 90° C et commercialisée par Noviant sous la dénomination CMC Finnfix™ 10:

On rajoute également 8,4 kg d'une solution aqueuse à 25 % de concentration, d'alcool polyvinylique précédemment dissout pendant au moins 20 minutes à au moins 90° C et commercialisé par Clariant sous la dénomination Mowiol^{TM} 4=98.

Comme liant, on ajoute alors 28 kg d'une dispersion aqueuse à 50 % en poids d'un styrène-butadiène commercialisé par Dow Europe sous la dénomination Dow Latex DL 940 et 38,5 kg d'une dispersion aqueuse à 50 % en poids d'un copolymère d'ester acrylique commercialisé par BASF sous la dénomination Acronal™ S 360 D.

Enfin sont ajoutés 1,9 kg d'azurant optique sous la forme d'un dérivé aqueux de 4,4-diaminostilbène-2,2-acide disulfonique commercialisé par Bayer sous le nom Blancophor™ P ainsi que 2,8 kg d'une dispersion aqueuse à 50 % de concentration en matière sèche d'un stéarate de calcium vendu par Henkel-Nopco AS sous le nom Nopcote™ C-104.

Ces ajouts effectués, l'agitation est maintenue pendant encore 15 minutes.

Le pH de la sauce de couchage est alors contrôlé et réglé à une valeur d'environ 9 à l'aide d'une solution de soude à 10 %.

La teneur en matière sèche de la sauce de couchage est elle aussi contrôlée et réglée à une valeur d'environ 68,5 % par ajout éventuel d'eau.

La viscosité Brookfield^{TM} de la sauce de couchage obtenue mesurée à 32°C à l'aide du viscosimètre Brookfield^{TM} modèle DV-II+ équipé du mobile correspondant est égale à 6100 mPa.s à 20 min⁻¹ et 1800 mPa.s à 100 min⁻¹.

La sauce de couchage obtenue sert à coucher des feuilles de papier support précité à l'aide d'une coucheuse pilote Combiblades de la société Jagenberg GmbH équipée d'une lame de 0,457 mm d'épaisseur.

Une tête « long dwell » est utilisée avec un angle de lame de 45°. La vitesse du couchage est de 1000 m/s et la couche moyenne déposée est de 11 g/m² sur chaque face du papier.

L'humidité relative obtenue pour chaque papier est de l'ordre de 4,2 % à 4,6 % en poids pour poids.

Le papier ainsi couché est ensuite calandré à l'aide d'une supercalandreuse à 9 zones de contact entre les dix rouleaux, commercialisée par Kleinewefers.

Le diamètre de calandrage fer est de 180 mm et de 270 mm par rapport au coton.

La mesure de la brillance 20°, 60°, 85° ISO 2813 du papier couché et calandré, qui consiste à passer la feuille de papier couché et calandré dans le brillancemètre de laboratoire de laboratoire BYK-Gardner « haze gloss » sur papier avec support de verre détermine le supercalandrage.

Cette mesure de brillance étant faite, les échantillons de papier sont coupés en format DIN A3 et sont conditionnés dans une pièce climatisée et selon la norme DIN EN 20187 pour détermination des valeurs de brillance 45° DIN et 75° DIN (DIN 54 502) et 75° TAPPI.

Les valeurs des diverses brillances figurent dans le tableau 1 situé en fin de l'essai n°2.

### Essai n° 2

Cet essai illustre l'invention et met en oeuvre, comme agent d'aide au broyage, 1.8 % en poids sec, par rapport au poids sec de carbonate de calcium, d'un copolymère composé, exprimé en poids, de :
a) 3,0 % d'acide acrylique et 2,0 % d'acide maléique
b) 94,0 % d'un monomère de formule (I) dans laquelle :
   R₁ représente l'hydrogène
   R₂ représente l'hydrogène
   R représente le groupe vinyle
   R' représente le radical méthyle
   avec m = p = 0 ; n = 114 ; q= 1 et (m+n+p)q = 114
c) 1,0 % d'un monomère de formule (IIb) dans laquelle
   R représente le groupe méthacrylate
   A représente le radical propyle
   B représente le radical méthyle
   de viscosité intrinsèque égalé à 39,5 ml/g selon la méthode dite méthode de visco. intrinsèque précitée (et égale à 30,3 ml/g selon la deuxième méthode) pour obtenir par un broyage en deux étapes, une suspension de carbonate de calcium à 74,7 % en poids de matière sèche et de granulométrie telle que 98 % en poids des particules ont un diamètre inférieur à 2 µm et 78 % en poids des particules ont un diamètre inférieur à 1 µm mesurée au Sédigraph™ 5100.

Ce procédé de broyage en deux étapes consiste à broyer, au cours de la première étape, une suspension de carbonate de calcium de diamètre moyen initial égal à 5 µm mesuré à l'aide du granulomètre Sédigraph™ 5100 en une suspension aqueuse de carbonate de calcium à une granulométrie telle que 62 % en poids des particules ont un diamètre inférieur à 2 µm et 37 % en poids des particules ont un diamètre inférieur à 1 µm mesurée au Sédigraph™ 5100, puis à broyer cette suspension à la granulométrie finale recherchée.

A la fin du broyage, la viscosité Brookfield™ de la suspension est mesurée à l'aide d'un viscosimètre Brookfield™ type RVT, à une température de 23°C et une vitesse de rotation de 100 tours par minute avec le mobile adéquat.

On obtient une valeur de viscosité Brookfield™ égale à 750 mPa.s.

Une heure après la fin du broyage, on récupère dans un flacon un échantillon de la suspension pigmentaire dont la granulométrie de cette suspension (98 % en poids des particules ont un diamètre inférieur à 2 µm et 78 % en poids des particules ont un diamètre inférieur à 1 µm) est mesurée à l'aide d'un granulomètre Sédigraph™ 5100.

Après un temps de repos de 7 jours dans le flacon, la viscosité Brookfield™ de la suspension est mesurée par introduction, après 5 minutes d'agitation du flacon, du mobile adéquat du viscosimètre Brookfield™ type RVT, à une température de 23°C et une vitesse de rotation de 100 tours par minute. On obtient une valeur de 680 mPa.s qui constitue la valeur de viscosité Brookfield™ appelée viscosité Brookfield™ APAG (après agitation).

La surface spécifique BET du pigment obtenu, déterminée selon la norme ISO 9277, est égale à 7,5 m²/g.

La demande cationique du pigment obtenu, déterminée selon la méthode PDDPC précitée, est égale à 3850 µ Val/kg.

Ladite suspension entre ensuite dans la composition de la sauce de couchage à tester, composée de :
- 80 parts en sec de la suspension aqueuse de carbonate de calcium à tester,
- 5 parts en sec d'une suspension aqueuse de carbonate de calcium plus grossier,
- 15 parts de kaolin délaminé,
- 9,5 parts de liant,
- 0,32 parts de carboxyméthyl cellulose,
- 0,6 part d'alcool polyvinylique,
- 0,15 part d'azurant optique, et
- 0,4 part de stéarate de calcium.
et préparée à 68 % de concentration en matière sèche, comme suit.

On mélange, dans un récipient contenant 20 kg d'eau et 0,125 kg d'un polyacrylate de sodium de concentration en matière sèche égale à 42 % et de viscosité intrinsèque égale à 6,2 ml/g selon la méthode dite méthode de visco. intrinsèque précitée, 22,5 kg d'une suspension aqueuse, à 78,2 % de concentration en matière sèche, de carbonate de calcium plus grossier commercialisé par Omya sous la dénomination Hydrocarb™ 60 et 375 kg de la suspension aqueuse à tester de carbonate de calcium selon l'invention obtenue précédemment à 74,7 % de concentration en matière sèche.

Le mélange des carbonates de calcium effectué, on ajoute sous une vitesse d'agitation moyenne, 52,5 kg kaolin délaminé commercialisé par Kaolin International B.V. sous la dénomination Amazon™ 88.

L'agitation est maintenue à vitesse moyenne pendant 15 minutes et après vérification visuelle de la présence ou non d'agglomérats, l'agitation est poursuivie jusqu'à la disparition des quelques agglomérats ou alors stoppée s'il n'y a pas d'agglomérats.

Il est alors ajouté 7,5 kg d'une solution aqueuse à 15 % de concentration, de carboxyméthyl cellulose précédemment dissoute pendant au moins 20 minutes à au moins 90°C et commercialisée par Noviant sous la dénomination CMC Finnfix™ 10.

On rajoute également 8,4 kg d'une solution aqueuse à 25 % de concentration, d'alcool polyvinylique précédemment dissout pendant au moins 20 minutes à au moins 90°C et commercialisé par Clariant sous la dénomination Mowiol™ 4-98.

Comme liant, on ajoute alors 28 kg d'une dispersion aqueuse à 50 % en poids d'un styrène-butadiène commercialisé par Dow Europe sous la dénomination Dow Latex DL 940 et 38,5 kg d'une dispersion aqueuse à 50 % en poids d'un copolymère d'ester acrylique commercialisé par BASF sous la dénomination Acronal™ S 360 D. Enfin sont ajoutés 1,9 kg d'azurant optique sous la forme d'un dérivé aqueux de 4,4-diaminostilbène-2,2-acide disulfonique commercialisé par Bayer sous le nom Blancophor™ P ainsi que 2,8 kg d'une dispersion aqueuse à 50 % de concentration en matière sèche d'un stéarate de calcium vendu par Henkel-Nopco AS sous le nom Nopcote™ C-104.

Ces ajouts effectués, l'agitation est maintenue pendant encore 15 minutes.

Le pH de la sauce de couchage est alors contrôlé et réglé à une valeur d'environ 9 à l'aide d'une solution de soude à 10 %.

La teneur en matière sèche de la sauce de couchage est elle aussi contrôlée et réglée à une valeur d'environ 68,5 % par ajout éventuel d'eau.

La viscosité Brookfield™ de la sauce de couchage obtenue mesurée à 32°C à l'aide du viscosimètre Brookfield™ modèle DV-II+ équipé du mobile correspondant est égale à 3600 mPa.s à 20 min⁻¹ et 1200 mPa.s à 100 min⁻¹.

La sauce de couchage obtenue sert à coucher, avec le même mode opératoire et le même matériel que dans l'essai n°1, des feuilles de papier support précité à l'aide d'une coucheuse pilote Combiblades de la société Jagenberg GmbH équipée d'une lame de 0,457 mm d'épaisseur.

Le papier étant couché et calandré avec le même mode opératoire et le même matériel que dans l'essai n°1, on détermine les valeurs de brillance 45° DIN et 75° DIN (DIN 54 502) et 75 ° TAPPI avec le même mode opératoire et le même matériel que dans l'essai n°1.

Les valeurs des diverses brillances figurent dans le tableau 1 suivant.

**TABLEAU 1**

| | Norme utilisée | unité | Art antérieur Essai n° 1 | Invention Essai n° 2 |
|---|---|---|---|---|
| papier couché | DIN EN ISO 536 | g/m² | 102 | 105 |
| Brillance (75°TAPPI) OS | TAPPI | % | 75 | 80 |
| Brillance (75°TAPPI) SS | TAPPI | % | 77 | 82 |
| Brillance (75°DIN) OS | DIN 54 502 | % | 46 | 50 |
| Brillance (75°DIN) SS | DIN 54 502 | % | 48 | 54 |
| Brillance (45°DIN) OS | DIN 54 502 | % | 17 | 23 |
| Brillance (45°DIN) SS | DIN 54 502 | % | 19 | 28 |
| Rugosité (PPS) 1.0 soft OS | ISO 8791-4 | µm | 0.610 | 0.579 |
| Rugosité (PPS) 1.0 soft SS | ISO 8791-4 | µm | 0.608 | 0.530 |

| | | | | |
|---|---|---|---|---|
| OS = Surface supérieure (Oberseite) SS = Côté de la toile ou envers (Siebseite) | | | | |

La lecture du tableau permet de constater que le papier couché avec les sauces de couchages contenant les suspensions aqueuses de carbonate de calcium naturel selon l'invention montre une brillance plus élevée quel que soit l'angle de vision, c'est-à-dire un angle compris entre 20° et 85°, et plus particulièrement entre 45° et 75° et une rugosité plus faible que le papier couché avec des sauces de couchage standard de l'art antérieur.

### Exemple 2

Cet exemple concerne l'utilisation de copolymères selon l'invention dans un autre procédé de broyage de charges minérales. Il concerne également l'utilisation des suspensions ainsi obtenues dans la fabrication de sauces de couchage papetières, ces dites sauces étant utilisées pour coucher des papiers. Cet exemple concerne aussi la mesure de la brillance des papiers obtenus.

### Essai n° 3

Cet essai illustre l'art antérieur et met en oeuvre la suspension de carbonate de calcium broyée de l'essai n° 1 et de granulométrie telle que 97 % en poids des particules ont un diamètre inférieur à 2 µm et 81 % en poids des particules ont un diamètre inférieur à 1 µm mesurée au Sédigraph^{TM} 5100.

Ladite suspension est diluée à une concentration égale à 50 % en matière sèche, puis mélangée, dans un rapport 50 :6, à une dispersion aqueuse à 50 % en poids d'un copolymère d'ester acrylique commercialisé par BASF sous la dénomination Acronal™ S 360 D.

La sauce de couchage ainsi obtenue sert à coucher des feuilles de papier support Synteape à l'aide d'une coucheuse Erichsen.

Le papier ainsi couché est ensuite calandré 4 fois à l'aide d'une calandreuse Dixon modèle 8000 dont les échantillons de papier sont coupés en format DIN A3 et sont conditionnés dans une pièce climatisée et selon la norme DIN EN 20187 pour détermination des valeurs de brillance 20°, 60°, 85° ISO 2813 à l'aide du brillancemètre de laboratoire BYK-Gardner.

Les résultats obtenus sont :
Brillance à 20° = 2,25
Brillance à 60° = 28
Brillance à 85° = 84,5.

### Essai n° 4

Cet essai illustre l'invention et met en oeuvre 2,08 % en poids sec, par rapport au poids sec de carbonate de calcium, d'un copolymère composé, exprimé en poids, de :
a) 8,7 % d'acide acrylique et 1,5 % d'acide méthacrylique
b) 89,4 % d'un monomère de formule (I) dans laquelle :
   R₁ représente l'hydrogène
   R₂ représente l'hydrogène
   R représente le groupe méthacrylate
   R' représente le radical méthyle
   avec m = p = 0 ; n = 11.4 ; q= 1 et (m+n+p)q = 114
c) 0,4 % d'un monomère de formule (IIb) dans laquelle
   R représente le groupe méthacrylate
   A représente le radical propyle
   B représente le radical méthyle
de viscosité intrinsèque égale à 20,7 ml/g selon la méthode dite méthode de visco. intrinsèque précitée, pour obtenir à partir d'un carbonate de calcium d'un diamètre médian de 15 µm, une suspension aqueuse de carbonate de calcium broyé ayant une concentration en matière sèche égale à 75 % en poids et ayant une granulométrie telle que 81 % en poids des particules ont un diamètre inférieur à 1 µm mesurée au Sédigraph™ 5100.

Pour ce faire, on utilise un broyeur du type Dyno-Mill™ à cylindre fixe et impulseur tournant, dont le corps broyant est constitué par des billes à base de zirconium de diamètre compris dans l'intervalle 0,6 millimètre à 1 millimètre.

Le volume total occupé par le corps broyant est de 1000 centimètres cubes tandis que sa masse est de 2700 g.

La chambre de broyage a un volume de 1400 centimètres cubes.

La vitesse circonférentielle du broyeur est de 10 mètres par seconde.

La suspension de pigment est recyclée à raison de 40 litres par heure.

La sortie du Dyno-Mill™ est munie d'un séparateur de mailles 200 microns permettant de séparer la suspension résultant du broyage et le corps broyant.

La température lors de chaque essai de broyage est maintenue à environ 60°C.

A la fin du broyage, la concentration en matière sèche finale est égale à 74,7 % et la viscosité Brookfield™ de la suspension est mesurée à l'aide d'un viscosimètre Brookfield™ type RVT, à une température de 23°C et une vitesse de rotation de 100 tours par minute avec le mobile adéquat.

On obtient une valeur de viscosité BrookfieldTM égale à 712 mPa.s.

Après un temps de repos de 7 jours dans le flacon, la viscosité Brookfield™ de la suspension est mesurée par introduction, dans le flacon non agité, du mobile adéquat du viscosimètre Brookfield™ type RVT, à une température de 23°C et une vitesse de rotation de 100 tours par minute. On obtient une valeur de 2240 mPa.s qui constitue la valeur de viscosité Brookfield™ appelée viscosité Brookfield™ AVAG (avant agitation).

Les mêmes mesures de viscosité Brookfield™ sont également effectuées une fois le flacon agité pendant 5 minutes et constituent les résultats de viscosité APAG (après agitation). On obtient 686 mPa.s.

Ces mesures de viscosité Brookfield™ ayant été effectuées, on procède à la détermination de la demande cationique du pigment obtenu.

Cette dernière, déterminée selon la méthode PDDPC précitée, est égale à 7050 µ Val/kg.

La suspension aqueuse de carbonate de calcium ainsi obtenue est alors diluée à 50 % puis mélangée, à une dispersion aqueuse à 50 % en poids d'un copolymère d'ester acrylique commercialisé par BASF sous la dénomination Acronal^{TM} S 360 D, dans les mêmes conditions et le même rapport que l'essai n° 3 afin de former une sauce de couchage qui est couchée sur le même papier support que celui de l'essai n° 3.

Les valeurs de brillance 20°, 60°, 85° ISO 2813 sont effectuées, à l'aide du brillancemètre de laboratoire BYK-Gardner, après un quadruple calandrage effectué dans les mêmes conditions et avec le même matériel que dans l'essai n° 3.

Les résultats obtenus sont :
Brillance à 20° = 4,25
Brillance à 60° = 44
Brillance à 85° = 87,5.

### Essai n° 5

Cet essai illustre l'invention et met en oeuvre 2,02 % en poids sec, par rapport au poids sec de carbonate de calcium, d'un copolymère composé, exprimé en poids, de :
a) 8,7 % d'acide acrylique et 1,5 % d'acide méthacrylique
b) 89,5 % d'un monomère de formule (I) dans laquelle :
   R₁ représente l'hydrogène
   R₂ représente l'hydrogène
   R représente le groupe méthacrylate
   R' représente le radical méthyle
   avec m = p = 0 ; n = 114 ; q= 1 et (m+n+p)q = 114
c) 0,4 % d'un monomère de formule (IIb) dans laquelle
   R représente le groupe vinyle
   A est absent
   B représente le radical méthyle
de viscosité intrinsèque égale à 20,4 ml/g selon la méthode dite méthode de visco. intrinsèque précitée, pour obtenir à partir d'un carbonate de calcium d'un diamètre médian de 15 µm, une suspension aqueuse de carbonate de calcium broyé ayant une concentration en matière sèche égale à 75 % en poids et ayant une granulométrie telle que 83 % en poids des particules ont un diamètre inférieur à 1 µm mesurée au Sédigraph™ 5100.

Pour ce faire, on utilise le même équipement et le même mode opératoire de broyage pour obtenir la suspension aqueuse de carbonate de calcium.

Les résultats de concentration en matière sèche et de viscosité Brookfield™ obtenus avec la même méthode que l'essai n°4 sont les suivants :
Concentration en matière sèche = 74,3 %
Viscosité (Tₒ) = 613 mPa.s
Viscosité AVAG (T_{7 jours}) = 3030 mPa.s
Viscosité APAG (T_{7 jours}) = 650 mPa.s

Ces mesures de viscosité Brookfield™ ayant été effectuées, on procède à la détermination de la demande cationique du pigment obtenu.

Cette dernière, déterminée selon la méthode PDDPC précitée, est égale à 7180 µ Val/kg.

La suspension aqueuse de carbonate de calcium ainsi obtenue est alors diluée à 50 % puis mélangée, à une dispersion aqueuse à 50 % en poids d'un copolymère d'ester acrylique commercialisé par BASF sous la dénomination Acronal™ S 360 D, dans les mêmes conditions et le même rapport que l'essai n° 3 afin de former une sauce de couchage qui est couchée sur le même papier support que celui de l'essai n° 3.

Les valeurs de brillance 20°, 60°, 85° ISO 2813 sont effectuées, à l'aide du brillancemètre de laboratoire BYK-Gardner, après un quadruple calandrage effectué dans les mêmes conditions et avec le même matériel que dans l'essai n° 3.

Les résultats obtenus sont :
Brillance à 20° = 4,25
Brillance à 60° = 46
Brillance à 85° = 89.

### Essai n° 6

Cet essai illustre l'invention et met en oeuvre 2,08 % en poids sec, par rapport au poids sec de carbonate de calcium, d'un copolymère composé, exprimé en poids, de :
a) 8,7 % d'acide acrylique et 1,5 % d'acide méthacrylique
b) 87,0 % d'un monomère de formule (I) dans laquelle :
   R₁ représente l'hydrogène
   R₂ représente l'hydrogène
   R représente le groupe méthacrylate
   R' représente le radical méthyle
   avec m = p = 0 ; n = 114 ; q = 1 et (m+n+p)q = 114
c) 3,0 % d'un monomère de formule (IIb) dans laquelle
   R représente le groupe méthacrylate
   A représente le groupe propyle
   B représente le radical méthyle
de viscosité intrinsèque égale à 23,2 ml/g selon la méthode dite méthode de visco. intrinsèque précitée, pour obtenir à partir d'un carbonate de calcium d'un diamètre médian de 15 µm, une suspension aqueuse de carbonate de calcium broyé ayant une concentration en matière sèche égale à 75 % en poids et ayant une granulométrie telle que 81 % en poids des particules ont un diamètre inférieur à 1 µm mesurée au Sédigraph™ 5100.

Pour ce faire, on utilise le même équipement et le même mode opératoire de broyage pour obtenir la suspension aqueuse de carbonate de calcium.

Les résultats de concentration en matière sèche et de viscosité Brookfield^{TM} obtenus avec la même méthode que l'essai n°4 sont les suivants :
Concentration en matière sèche = 77,0 %
Viscosité (Tₒ) = 648 mPa.s
Viscosité AVAG (T_{7 jours}) = 2840 mPa.s
Viscosité APAG (T_{7 jours}) = 747 mPa.s

Ces mesures de viscosité Brookfield™ ayant été effectuées, on procède à la détermination de la demande cationique du pigment obtenu.

Cette dernière, déterminée selon la méthode PDDPC précitée, est égale à 6900 µ Val/kg.

La suspension aqueuse de carbonate de calcium ainsi obtenue est alors diluée à 50 % puis mélangée, à une dispersion aqueuse à 50 % en poids d'un copolymère d'ester acrylique commercialisé par BASF sous la dénomination Acronal™ S 360 D, dans les mêmes conditions et le même rapport que l'essai n° 3 afin de former une sauce de couchage qui est couchée sur le même papier support que celui de l'essai n° 3.

Les valeurs de brillance 20°, 60°, 85° ISO 2813 sont effectuées, à l'aide du brillancemètre de laboratoire BYK-Gardner, après un quadruple calandrage effectué dans les mêmes conditions et avec le même matériel que dans l'essai n° 3.

Les résultats obtenus sont :
Brillance à 20° = 3,75
Brillance à 60° = 43
Brillance à 85° = 88,5.

### Essai n° 7

Cet essai illustre l'invention et met en oeuvre 2,08 % en poids sec, par rapport au poids sec de carbonate de calcium, d'un copolymère composé, exprimé en poids, de :
a) 8,7 % d'acide acrylique et 1,5 % d'acide méthacrylique
b) 87,0 % d'un monomère de formule (I) dans laquelle :
   R₁ représente l'hydrogène
   R₂ représente l'hydrogène
   R représente le groupe méthacrylate
   R' représente le radical méthyle
   avec m = p = 0 ; n = 114 ; q=1 et (m+n+p)q = 114
c) 3,0 % d'un monomère de formule (IIb) dans laquelle
   R représente le groupe vinyle
   A est absent
   B représente le radical méthyle
de viscosité intrinsèque égale à 20,0 ml/g selon la méthode dite méthode de visco. intrinsèque précitée, pour obtenir à partir d'un carbonate de calcium d'un diamètre médian de 15 µm, une suspension aqueuse de carbonate de calcium broyé ayant une concentration en matière sèche égale à 75 % en poids et ayant une granulométrie telle que 83 % en poids des particules ont un diamètre inférieur à 1 µm mesurée au Sédigraph™ 5100.

Pour ce faire, on utilise le même équipement et le même mode opératoire de broyage pour obtenir la suspension aqueuse de carbonate de calcium.

Les résultats de concentration en matière sèche et de viscosité Brookfield^{TM} obtenus avec la même méthode que l'essai n°4 sont les suivants :
Concentration en matière sèche = 74,3 %
Viscosité (Tₒ) = 808 mPa.s
Viscosité AVAG (T_{7 jours}) = 3000 mPa.s
Viscosité APAG (T_{7 jours}) = 802 mPa.s

Ces mesures de viscosité Brookfield™ ayant été effectuées, on procède à la détermination de la demande cationique du pigment obtenu.

Cette dernière, déterminée selon la méthode PDDPC précitée, est égale à 7710 µ Val/kg.

La suspension aqueuse de carbonate de calcium ainsi obtenue est alors diluée à 50 % puis mélangée, à une dispersion aqueuse à 50 % en poids d'un copolymère d'ester acrylique commercialisé par BASF sous la dénomination Acronal™ S 360 D, dans les mêmes conditions et le même rapport que l'essai n° 3 afin de former une sauce de couchage qui est couchée sur le même papier support que celui de l'essai n° 3.

Les valeurs de brillance 20°, 60°, 85° ISO 2813 sont effectuées, à l'aide du brillancemètre de laboratoire BYK-Gardner, après un quadruple calandrage effectué dans les mêmes conditions et avec le même matériel que dans l'essai n° 3.

Les résultats obtenus sont :
Brillance à 20° = 5,0
Brillance à 60° = 46
Brillance à 85° = 90,5.

### Essai n° 8

Cet essai illustre l'art antérieur et met en oeuvre la suspension de carbonate de calcium vendue par la société Omya sous le nom Hydrocarb™90ME.

La valeur de brillance 75° TAPPI est alors mesurée à l'aide du brillance-mètre de laboratoire après couchage mais sans aucun calandrage.

Le résultat obtenu est Brillance 75° TAPPI = 27,3.

### Essai n° 9

Cet essai illustre l'invention et met en oeuvre 1,21 % en poids sec, par rapport au poids sec de carbonate de calcium, d'un copolymère composé, exprimé en poids, de :
a) 6,0 % d'acide acrylique et 1,7 % d'acide méthacrylique
b) 87,2 % d'un monomère de formule (I) dans laquelle :
   R₁ représente l'hydrogène
   R₂ représente l'hydrogène
   R représente le groupe méthacrylate
   R' représente le radical méthyle
   avec m = p = 0 ; n = 113 ; q= 1 et (m+n+p)q = 113
   et 5,0 % d'un monomère de formule (I) dans laquelle :
      R₁ représente l'hydrogène
      R₂ représente l'hydrogène
      R représente le groupe méthacryluréthanne
      R' représente le radical méthyle
      avec m = p = 0 ; n = 113 ; q= 1 et (m+n+p)q = 113
c) 0,1 % d'acrylate d'éthyle,
de viscosité intrinsèque égale à 32,1 ml/g selon la méthode dite méthode de visco. intrinsèque précitée, pour obtenir à partir d'un carbonate de calcium d'un diamètre médian de 15 µm, une suspension aqueuse de carbonate de calcium broyé ayant une concentration en matière sèche égale à environ 76 % en poids et ayant une granulométrie telle que 91 % en poids des particules ont un diamètre inférieur à 2 µm mesurée au Sédigraph™ 5100.

Pour ce faire, on utilise le même équipement et le même mode opératoire de broyage pour obtenir la suspension aqueuse de carbonate de calcium.

Les résultats de concentration en matière sèche et de viscosité Brookfield™ (T₀) obtenus avec la même méthode que l'essai n°4 sont les suivants :
Concentration en matière sèche = 74,7 %
Viscosité (Tₒ) = 295 mPa.s

La suspension aqueuse de carbonate de calcium ainsi obtenue est alors diluée à 50 % puis mélangée, à une dispersion aqueuse à 50 % en poids d'un copolymère d'ester acrylique commercialisé par BASF sous la dénomination Acronal^{TM} S 360 D, dans les mêmes conditions et le même rapport que l'essai n° 3 afin de former une sauce de couchage qui est couchée sur le même papier support que celui de l'essai n° 3.

Les valeurs de brillance 75° TAPPI sont effectuées, à l'aide du brillance-mètre de laboratoire BYK-Gardner, sans calandrage effectué dans les mêmes conditions et avec le même matériel que dans l'essai n° 3.

Le résultat obtenu est :
Brillance 75° TAPPI = 46,3.

### Essai n° 10

Cet essai illustre l'invention et met en oeuvre 1,60 % en poids sec, par rapport au poids sec de carbonate de calcium, d'un copolymère composé, exprimé en poids, de :
a) 11,8 % d'acide acrylique et 16,1 % d'acide méthacrylique
b) 69,1 % d'un monomère de formule (I) dans laquelle :
   R₁ représente l'hydrogène
   R₂ représente l'hydrogène
   R représente le groupe méthacrylate R' représente le radical méthyle
   avec m = p = 0 ; n = 113 ; q= 1 et (m+n+p)q = 113 et de 3,0 % d'un monomère de formule (I) dans laquelle :
      R₁ représente le radical méthyle
      R₂ représente l'hydrogène
      R représente le groupe méthacrylamide
      R' représente le radical méthyle
      avec m = 3 ; p = 0 ; n = 9 ; q= 1 et (m+n+p)q = 12,
de viscosité intrinsèque égale à 61,1 ml/g selon la méthode dite méthode de visco. intrinsèque précitée, pour obtenir à partir d'un carbonate de calcium d'un diamètre médian de 15 µm, une suspension aqueuse de carbonate de calcium broyé ayant une concentration en matière sèche égale à 76 % en poids et ayant une granulométrie telle que 92 % en poids des particules ont un diamètre inférieur à 2 µm mesurée au Sédigraph™ 5100.

Pour ce faire, on utilise le même équipement et le même mode opératoire de broyage pour obtenir la suspension aqueuse de carbonate de calcium.

Les résultats de concentration en matière sèche et de viscosité Brookfield™ (T₀) obtenus avec la même méthode que l'essai n°4 sont les suivants :
Concentration en matière sèche = 76,0 %
Viscosité (T₀) = 610 mPa.s

La suspension aqueuse de carbonate de calcium ainsi obtenue est alors diluée à 50 % puis mélangée, à une dispersion aqueuse à 50 % en poids d'un copolymère d'ester acrylique commercialisé par BASF sous la dénomination Acronal™ S 360 D, dans les mêmes conditions et le même rapport que l'essai n° 3 afin de former une sauce de couchage qui est couchée sur le même papier support que celui de l'essai n° 3.

Les valeurs de brillance 75° TAPPI sont effectuées, à l'aide du brillancemètre de laboratoire BYK-Gardner, sans calandrage effectué dans les mêmes conditions et avec le même matériel que dans l'essai n° 3.

Le résultat obtenu est :
Brillance 75° TAPPI = 50,0.

La lecture des résultats de brillance des essais n° 3 à 7 permet de constater que le papier couché avec les sauces de couchages contenant les suspensions aqueuses de carbonate de calcium selon l'invention montre une brillance plus élevée quel que soit l'angle de vision, c'est-à-dire un angle compris entre 20° et 85°, et plus particulièrement entre 45° et 75° que le papier couché avec des sauces de couchage standard de l'art antérieur.

La lecture des résultats de brillance des essais n° 8 à 10 permet de constater que le papier couché avec les sauces de couchages contenant les suspensions aqueuses de carbonate de calcium selon l'invention montre une brillance plus élevée même pour un papier non calandré.

### Exemple 3

Cet exemple concerne l'utilisation de copolymères selon l'invention dans un procédé de dispersion de charges minérales, et plus particulièrement de carbonate de calcium. Il concerne également l'utilisation des suspensions ainsi obtenues dans la fabrication de sauces papetières, ces dites sauces étant utilisées pour coucher des papiers. Cet exemple concerne aussi la mesure de la brillance des papiers ainsi obtenus.

Dans les essais correspondant à cet exemple, on commence par disperser une suspension de matières minérales, selon une des méthodes bien connues de l'homme du métier.

La viscosité desdites suspensions est déterminée par la mise en oeuvre du même mode opératoire et le même matériel que ceux utilisé dans l'exemple 2.

Lesdites suspensions entrent ensuite dans la composition des sauces de couchage.

Dans cet exemple, chacune des sauces de couchage est réalisée par la mise en oeuvre du même mode opératoire et le même matériel que ceux utilisés dans l'exemple 2.

On mesure enfin la brillance de la feuille de papier couché et calandré, par la mise en oeuvre du même mode opératoire et du même matériel que ceux utilisé dans l'exemple 2.

### Essai n° 11

Cet essai illustre l'art antérieur et met en oeuvre 0,49 % en poids sec, par rapport au poids sec de carbonate de calcium, d'un polyacrylate neutralisé de magnésium et de sodium de viscosité intrinsèque égale à 7,8 ml/g selon la méthode dite méthode de visco. intrinsèque précitée, pour disperser dans l'eau et à une concentration en matière sèche égale à 72,2 %, un carbonate de calcium de granulométrie telle que 96 % en poids des particules ont un diamètre inférieur à 2 µm et 74 % en poids des particules ont un diamètre inférieur à 1 µm mesuré au Sédigraph™ 5100.

Les résultats obtenus sont :
Brillance à 20° = 2,70
Brillance à 60° = 32
Brillance à 85° = 86.

### Essai n° 12

Cet essai illustre l'invention et met en oeuvre, selon le même mode opératoire que l'essai précédent, 0,77 % en poids sec, par rapport au poids sec de carbonate de calcium, du copolymère de l'essai n° 2 selon l'invention.

Les résultats obtenus sont :
Brillance à 20° = 3,25
Brillance à 60° = 42
Brillance à 85° = 87.

### Essai n° 13

Cet essai illustre l'invention et met en oeuvre, selon le même mode opératoire que l'essai précédent, 0,87 % en poids sec, par rapport au poids sec de carbonate de calcium, du copolymère de l'essai n° 6 selon l'invention.

Les résultats obtenus sont :
Brillance à 20° = 2,75
Brillance à 60° = 36
Brillance à 85° = 86,5.

La lecture des résultats de brillance des essais n° 11 à 13 permet de constater que le papier couché avec les sauces de couchages contenant les suspensions aqueuses de carbonate de calcium selon l'invention montre une brillance plus élevée que le papier couché avec des sauces de couchage standard de l'art antérieur.

### Exemple 4

Cet exemple illustre un procédé de fabrication de sauce de couchage et concerne l'utilisation de copolymères selon l'invention comme additifs dans la suspension de matières minérales entrant dans la fabrication de sauces de couchage papetières. Cet exemple concerne aussi la mesure de la brillance des papiers ainsi obtenus. Cet exemple a enfin pour objet d'illustrer l'efficacité de copolymères selon l'invention comme activateur de brillance des papiers couchés.

### Essai n° 14

Cet essai est un essai témoin qui illustre une sauce de couchage ne mettant en oeuvre aucun ajout d'additif dans la suspension de charges minérales.

Ainsi, réalise t'on, la sauce de couchage en mélangeant tout d'abord une suspension de carbonate de calcium commercialisée par la société OMYA sous le nom Covercarb™ 75ME, et une suspension de kaolin commercialisée par la société HUBER sous le nom Hydragloss" 90 correspondant à 100 parts en poids de pigment sec composé de 70 parts de carbonate de calcium et de 30 parts de kaolin, puis en ajoutant successivement pour ces 100 parts :
- la quantité d'eau nécessaire à l'obtention d'une suspension de concentration en matière sèche égale à 60 %,
- 1 part exprimée en poids sec d'alcool polyvinylique vendu sous le nom Mowiol™ 4-98 par la société CLARIANT,
- 1 part exprimée en poids sec de carboxyméthyl cellulose vendu sous le nom Finnfix® 10 par la société NOVIANT,
- 12 parts exprimées en poids sec d'un latex styrène-butadiène commercialisé par la société DOW CHEMICAL sous le nom de DL966™,
- et 0,8 part en poids en l'état d'azurant optique Blancophor P™ commercialisé par la société BAYER.

Ces ajouts effectués, l'agitation est maintenue pendant encore 15 minutes.

Le pH de la sauce de couchage est alors contrôlé et réglé à une valeur de 8,6 à l'aide d'une solution de soude à 10 %.

La teneur en matière sèche de la sauce de couchage est elle aussi contrôlée et réglée à une valeur de 59,8 % par ajout éventuel d'eau.

La viscosité Brookfield™ de la sauce de couchage obtenue mesurée à 32°C à l'aide du viscosimètre Brookfield™ modèle RVT équipé du mobile correspondant est égale à 7020 mPa.s à 10 t/min et 1240 mPa.s à 100 t/min.

On utilise ensuite cette sauce de couchage pour coucher une feuille de papier de dimensions 21 x 29,7 cm avec un poids spécifique de 96 g/m² au moyen d'une coucheuse de laboratoire K-Coater.

Cette feuille de papier est ainsi couchée à 10 g/m² puis sécher dans une étuve non ventilée pendant 5 minutes à 50 °C.

Le papier ainsi couché est ensuite calandré en 2 passages à l'aide d'une calandreuse de laboratoire Ramisch type RK22HU à une température de 80°C et sous une pression de 40 bars.

Les échantillons de papier calandré sont ensuite coupés en format DIN A3 et conditionnés dans une pièce climatisée selon la norme DIN EN 20187 pour en déterminer la valeur de brillance 75° TAPPI selon Lehmann à l'aide du brillancemètre de laboratoire BYK-Gardner.

Le résultat obtenu est :
Brillance à 75° TAPPI = 70,6.

### Essai n° 15

Cet essai illustre l'invention et met en oeuvre une sauce de couchage contenant un copolymère selon l'invention ajouté dans la suspension de charges minérales.

Ainsi, réalise t'on, la sauce de couchage en mélangeant tout d'abord une suspension de carbonate de calcium commercialisée par la société OMYA sous le nom Covercarb^{TM} 75ME, et une suspension de kaolin commercialisée par la société HUBER sous le nom Hydragloss™ 90 correspondant à 100 parts en poids de pigment sec composé de 70 parts de carbonate de calcium et de 30 parts de kaolin, puis en ajoutant successivement pour ces 100 parts :
- 0,35 part en poids sec du copolymère selon l'invention, le dit copolymère étant neutralisé par la soude et étant constitué de :
   a) 5,9 % d'acide acrylique et 1,6 % d'acide méthacrylique
   b) 92,5 % d'un monomère de formule (I) dans laquelle :
      R₁ représente l'hydrogène
      R₂ représente l'hydrogène
      R représente le groupe méthacrylate
      R' représente le radical méthyle
      avec m = p = 0 ; n = 113 ; q = 1 et (m+n+p)q = 113,
         et ayant une viscosité intrinsèque égale à 21,0 ml/g selon la méthode dite méthode de visco. intrinsèque précitée,
- la quantité d'eau nécessaire à l'obtention d'une suspension de concentration en matière sèche égale à 60 %,
- 1 part exprimée en poids sec d'alcool polyvinylique vendu sous le nom Mowiol^{TM} 4-98 par la société CLARIANT,
- 1 part exprimée en poids sec de carboxyméthyl cellulose vendu sous le nom Finnfix® 10par la société NOVIANT,
- 12 parts exprimées en poids sec d'un latex styrène-butadiène commercialisé par la société DOW CHEMICAL sous le nom de DL966™,
- et 0,8 part en poids en l'état d'azurant optique Blancophor P™ commercialisé par la société BAYER.

Ces ajouts effectués, l'agitation est maintenue pendant encore 15 minutes.

Le pH de la sauce de couchage est alors contrôlé et réglé à une valeur de 8,6 à l'aide d'une solution de soude à 10 %.

La teneur en matière sèche de la sauce de couchage est elle aussi contrôlée et réglée à une valeur de 59,8 % par ajout éventuel d'eau.

La viscosité Brookfield™ de la sauce de couchage obtenue mesurée à 32°C à l'aide du viscosimètre Brookfield™ modèle RVT équipé du mobile correspondant est égale à 9340 mPa.s à 10 t/min et 1640 mPa.s à 100 t/min.

On utilise ensuite cette sauce de couchage pour coucher une feuille de papier de dimensions 21 x 29,7 cm avec un poids spécifique de 96 g/m² au moyen d'une coucheuse de laboratoire K-Coater selon le même mode opératoire et avec le même matériel que dans l'essai n° 14.

Le papier ainsi couché est ensuite calandré selon le même mode opératoire et avec le même matériel que dans l'essai n° 14.

La valeur de brillance 75° TAPPI selon Lehmann à l'aide du brillancemètre de laboratoire BYK-Gardner est égale à 72,7.

### Essai n° 16

Cet essai illustre l'invention et met en oeuvre une sauce de couchage contenant un copolymère selon l'invention ajouté dans la suspension de charges minérales.

Ainsi, réalise t'on, la sauce de couchage en mélangeant tout d'abord une suspension de carbonate de calcium commercialisée par la société OMYA sous le nom Covercarb™ 75ME, et une suspension de kaolin commercialisée par la société HUBER sous le nom Hydragloss™ 90 correspondant à 100 parts en poids de pigment sec composé de 70 parts de carbonate de calcium et de 30 parts de kaolin, puis en ajoutant successivement pour ces 100 parts :
- 0,70 part en poids sec du même copolymère selon l'invention que celui mis en oeuvre dans l'essai précédent,
- la quantité d'eau nécessaire à l'obtention d'une suspension de concentration en matière sèche égale à 60 %,
- 1 part exprimée en poids sec d'alcool polyvinylique vendu sous le nom Mowiol^{TM} 4-98 par la société CLARIANT,
- 1 part exprimée en poids sec de carboxyméthyl cellulose vendu sous le nom Finnfix® 10par la société NOVIANT,
- 12 parts exprimées en poids sec d'un latex styrène-butadiène commercialisé par la société DOW CHEMICAL sous le nom de DL966™,
- et 0,8 part en poids en l'état d'azurant optique Blancophor P™ commercialisé par la société BAYER.

Ces ajouts effectués, l'agitation est maintenue pendant encore 15 minutes.

Le pH de la sauce de couchage est alors contrôlé et réglé à une valeur de 8,6 à l'aide d'une solution de soude à 10 %.

La teneur en matière sèche de la sauce de couchage est elle aussi contrôlée et réglée à une valeur de 59,8 % par ajout éventuel d'eau.

La viscosité Brookfield™ de la sauce de couchage obtenue mesurée à 32°C à l'aide du viscosimètre Brookfield™ modèle RVT équipé du mobile correspondant est égale à 10000 mPa.s à 10 t/min et 1760 mPa.s à 100 t/min.

On utilise ensuite cette sauce de couchage pour coucher une feuille de papier de dimensions 21 x 29,7 cm avec un poids spécifique de 96 g/m² au moyen d'une coucheuse de laboratoire K-Coater selon le même mode opératoire et avec le même matériel que dans l'essai n° 14.

Le papier ainsi couché est ensuite calandré selon le même mode opératoire et avec le même matériel que dans l'essai n° 14.

La valeur de brillance 75° TAPPI selon Lehmann à l'aide du brillancemètre de laboratoire BYK-Gardner est égale à 73,5.

La lecture des résultats de brillance des essais n° 14 à 16 permet de constater que le papier couché avec les sauces de couchages contenant les suspensions aqueuses de carbonate de calcium additivées selon l'invention montre une brillance plus élevée que le papier couché avec des sauces de couchage standard.

### Exemple 5

Cet exemple illustre un procédé de fabrication de sauce de couchage et concerne l'utilisation de copolymères selon l'invention comme additifs dans la fabrication de sauces de couchage papetières. Cet exemple concerne aussi la mesure de la brillance des papiers ainsi obtenus. Cet exemple a enfin pour objet d'illustrer l'efficacité de copolymères selon l'invention comme activateur de brillance des papiers couchés.

Pour ce faire, l'essai n° 14 sert également de témoin, l'essai n° 17 suivant illustrant l'invention.

Pour ce faire, on réalise la sauce de couchage en mélangeant tout d'abord une suspension de carbonate de calcium commercialisée par la société OMYA sous le nom Covercarb™ 75ME, et une suspension de kaolin commercialisée par la société HUBER sous le nom Hydragloss™ 90 correspondant à 100 parts en poids de pigment sec composé de 70 parts de carbonate de calcium et de 30 parts de kaolin, puis en ajoutant successivement pour ces 100 parts:
- la quantité d'eau nécessaire à l'obtention d'une suspension de concentration en matière sèche égale à 60 %,
- 1 part exprimée en poids sec d'alcool polyvinylique vendu sous le nom Mowiol™ 4-98 par la société CLARIANT,
- 1 part exprimée en poids sec de carboxyméthyl cellulose vendu sous le nom Finnfix® 10 par la société NOVIANT,
- 12 parts exprimées en poids sec d'un latex styrène-butadiène commercialisé par la société DOW CHEMICAL sous le nom de DL966™
- 1,0 part en poids sec du même copolymère selon l'invention que celui mis en oeuvre dans l'essai précédent,
- et 0,8 part en poids en l'état d'azurant optique Blancophor P™ commercialisé par la société BAYER.

Ces ajouts effectués, l'agitation est maintenue pendant encore 15 minutes.

Le pH de la sauce de couchage est alors contrôlé et réglé à une valeur de 8,6 à l'aide d'une solution de soude à 10 %.

La teneur en matière sèche de la sauce de couchage est elle aussi contrôlée et réglée à une valeur de 59,8 % par ajout éventuel d'eau.

La viscosité Brookfield™ de la sauce de couchage obtenue mesurée à 32°C à l'aide du viscosimètre Brookfield™ modèle RVT équipé du mobile correspondant est égale à 1250 mPa.s à 10 t/min et 340 mPa.s à 100 t/min.

On utilise ensuite cette sauce de couchage pour coucher une feuille de papier de dimensions 21 x 29,7 cm avec un poids spécifique de 96 g/m² au moyen d'une coucheuse de laboratoire K-Coater selon le même mode opératoire et avec le même matériel que dans l'essai n° 14.

Le papier ainsi couché est ensuite calandré selon le même mode opératoire et avec le même matériel que dans l'essai n° 14.

La valeur de brillance 75° TAPPI selon Lehmann à l'aide du brillancemètre de laboratoire BYK-Gardner est égale à 73,0.

La lecture des résultats de brillance des essais n° 14 et 17 permet de constater que le papier couché avec les sauces de couchages contenant le copolymère selon l'invention utilisé comme additif de la sauce de couchage montre une brillance plus élevée que le papier couché avec une sauce de couchage standard.

### Exemple 6

Cet exemple illustre une composition de peinture contenant le copolymère selon l'invention et concerne l'utilisation de copolymères selon l'invention comme activateur de brillant d'une peinture. Cet exemple concerne aussi la mesure de la brillance de la peinture obtenue.

Pour ce faire, on prépare les peintures glycéro en mélangeant successivement les composés suivants, exprimés en poids sec :
- 240,0 grammes de Synolac™ 6868 WL 75 (alkyde long en huile de Cray Valley)
- 20,0 grammes de white spirit BT
- 240,0 grammes de RL 60 (dioxyde de titane de Millenium)
- 240,0 grammes de la suspension de carbonate de calcium à tester
- 190,0 grammes de Synolac™ 6868 WL 75 (alkyde long en huile de Cray Valley)
- 3,5 grammes d'un siccatif (Octa Soligen 69 de Borchers)
- 20, 0 grammes de white spirit BT
- 3,5 grammes d'un siccatif (Octa Soligen Calcium 10 de Borchers)
- 20, 0 grammes de white spirit BT
- 2 grammes d'antipeau (Borchinox M2 de Borchers)
- 21,0 grammes de white spirit BT.

Ces formulations de peinture effectuées, on en détermine la valeur de la brillance à 20° en opérant comme suit, à savoir que pour chaque peinture, deux applications sont faites sur carte contraste Leneta à la cale à 150 µm humide. Les applications sont répétées à 24 heures et 1 mois après fabrication.

Les mesures sont ensuite réalisées après 7 jours et 1 mois de vieillissement.

L'appareil utilisé est un brillance-mètre Minolta MultiGloss 268 sous un angle de 20°. Chaque valeur notée est la moyenne calculée sur les 2 cartes avec 5 points par carte.

### Essai n° 18

Cet essai illustre l'art antérieur et met en oeuvre une suspension de carbonate de calcium broyée à l'aide d'un polyacrylate de sodium de l'art antérieur.

On obtient les valeurs suivantes :
- Brillance sous 20° 7 jours (application à 24h) = 59
- Brillance sous 20° 1 mois (application à 24h) = 45
- Brillance sous 20° 7 jours (application à 1 mois) = 67
- Brillance sous 20° 1 mois (application à 1 mois) = 53.

### Essai n° 19

Cet essai illustre l'invention et met en oeuvre une suspension de carbonate de calcium broyée à l'aide d'un copolymère selon l'invention,
le dit copolymère étant neutralisé par la triéthanolamine et étant constitué de :
a) 45,1 % d'acide acrylique et 0,55 % d'acide méthacrylique
b) 11,75 % d'un monomère de formule (I) dans laquelle :
   R₁ représente l'hydrogène
   R₂ représente l'hydrogène
   R représente le groupe méthacrylate R' représente un radical alkyle à 15 atomes de carbone avec m=0, p=0, q=1 et n = 50,
c) 42,6 % d'acrylamide.

On obtient les valeurs suivantes :
- Brillance sous 20° 7 jours (application à 24h) = 65
- Brillance sous 20° 1 mois (application à 24h) = 55
- Brillance sous 20° 7 jours (application à 1 mois) = 71
- Brillance sous 20° 1 mois (application à 1 mois) = 58.

La lecture des résultats des essais n° 18 et n° 19 permet de constater l'efficacité du copolymère selon l'invention comme activateur de brillance.

## Revendications

1. Utilisation d'un copolymère faiblement ionique et hydrosoluble comme activateur de brillance quel que soit l'angle de vision, c'est-à-dire un angle compris entre 20° et 85°, et plus particulièrement entre 45° et 75° **caractérisée en ce que** ledit copolymère dispose d'au moins une fonction alkoxy ou hydroxy polyalkylène glycol greffée sur au moins un monomère insaturé éthylénique et **en ce que** ledit copolymère a une viscosité intrinsèque inférieure ou égale à 100 ml/g déterminée selon la méthode dite « méthode de visco. Intrinsèque », décrite dans la publication Vollmert « Outlines of macromolecular chemistry » volume III, Vollmert Verlag, Karlsruhe 1985 et par mise en oeuvre d'une solution d'eau bipermutée et d'un tube capillaire défini par la norme DIN 53101/0a, de constante 0,005 et de diamètre égal à 0,53 mm.

2. Utilisation d'un copolymère faiblement ionique et hydrosoluble comme activateur de brillance quel que soit l'angle de vision, selon la revendication 1 **caractérisée en ce que** ledit copolymère se compose d'au moins un monomère de formule (I) : 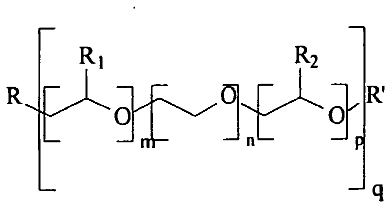 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, *α - α'* diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone,
et **en ce que** ledit copolymère a une viscosité intrinsèque inférieure ou égale à 100 ml/g déterminée selon la méthode dite « méthode de visco. intrinsèque. »

3. Utilisation d'un copolymère faiblement ionique et hydrosoluble comme activateur de brillance quel que soit l'angle de vision, selon l'une des revendications 1 ou 2 **caractérisée en ce que** ledit copolymère se compose :
a) d'au moins un monomère anionique et à fonction carboxylique ou dicarboxylique ou phosphorique ou sulfonique ou leur mélange,
b) d'au moins un monomère non ionique, le monomère non ionique étant constitué d'au moins un monomère de formule (I) : 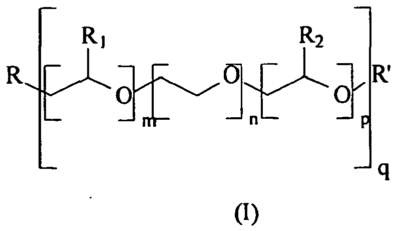 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q ≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, *α* - *α*' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone.
ou du mélange de plusieurs monomères de formule (I),
le total des proportions des constituants a), b), étant égal à 100 %,
et **en ce que** ledit copolymère a une viscosité intrinsèque inférieure ou égale à 100 ml/g déterminée selon la méthode dite « méthode de visco. intrinsèque ».

4. Utilisation d'un copolymère faiblement ionique et hydrosoluble comme activateur de brillance quel que soit l'angle de vision, selon l'une des revendications 1 à 3 **caractérisée en ce que** ledit copolymère est constitué, exprimé en poids :
a) de 2 % à 95 % et encore plus particulièrement de 5 % à 90 % d'au moins un monomère anionique à insaturation éthylénique et à fonction monocarboxylique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou à fonction dicarboxylique choisi parmi les monomères à insaturation éthylénique et fonction dicarboxylique tels que l'acide crotonique, isocrotonique, cinnamique, itaconique, maléique, ou encore les anhydrides d'acides carboxyliques, tels que l'anhydride maléique ou à fonction sulfonique choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore à fonction phosphorique choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, le phosphate d'acrylate de propylène glycol et leurs éthoxylats ou bien encore à fonction phosphonique choisi parmi les monomères à insaturation éthylénique et à fonction phosphonique tels que l'acide vinyl phosphonique, ou leurs mélanges,
b) de 2 à 95 % et encore plus particulièrement de 5 % à 90 % d'au moins un monomère à insaturation éthylénique non ionique de formule (I) : 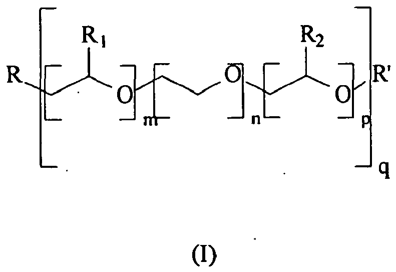 dans laquelle :
- m et p représentent un nombre de motifs d'oxyde d'alkylène inférieur ou égal à 150,
- n représente un nombre de motifs d'oxyde d'éthylène inférieur ou égal à 150,
- q représente un nombre entier au moins égal à 1 et tel que 5 ≤ (m+n+p)q
≤ 150, et préférentiellement tel que 15 ≤ (m+n+p)q ≤ 120,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, *α* - *α*' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 40 atomes de carbone, et représente préférentiellement un radical hydrocarboné ayant 1 à 12 atomes de carbone et très préférentiellement un radical hydrocarboné ayant 1 à 4 atomes de carbone.
ou du mélange de plusieurs monomères de formule (I),
le total des proportions des constituants a), b), étant égal à 100 % et **en ce que** ledit copolymère a une viscosité intrinsèque inférieure ou égale à 100 ml/g déterminée selon la méthode dite « méthode de visco. intrinsèque ».

5. Utilisation d'un copolymère faiblement ionique et hydrosoluble comme activateur de brillance quel que soit l'angle de vision, selon l'une des revendications 1 à 4 **caractérisée en ce que** ledit copolymère est sous sa forme acide ou partiellement ou totalement neutralisé par un ou plusieurs agents de neutralisation disposant d'une fonction neutralisante monovalente ou disposant d'une fonction neutralisante polyvalente tels que pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que la stéarylamine, les éthanolamines (mono-, di-, triéthanolamine), la mono et diéthylamine, la cyclohexylamine, la méthylcyclohexylamine, l'amino méthyl propanol, la morpholine ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

6. Procédé de dispersion en suspension aqueuse de matières minérales **caractérisé en ce que** l'on utilise le copolymère selon l'une des revendications 1 à 5.

7. Procédé de dispersion en suspension aqueuse de matières minérales selon la revendication 6 **caractérisé en ce que** l'on utilise de 0,05 % à 5 % en poids sec dudit copolymère par rapport au poids sec des charges et/ou pigments, et plus particulièrement **en ce qu'**on utilise de 0,1 % à 2,5 % en poids sec dudit copolymère par rapport au poids sec des charges et/ou pigments.

8. Procédé de dispersion en suspension aqueuse de matières minérales selon l'une des revendications 6 ou 7 **caractérisé en ce que** la matière minérale est choisie parmi le carbonate de calcium, les dolomies, le kaolin, le kaolin calciné, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est préférentiellement du carbonate de calcium tel que le carbonate de calcium naturel choisi parmi le marbre, la calcite, la craie ou leurs mélanges.

9. Suspension aqueuse de matières minérales dispersées **caractérisée en ce qu'**elle contient ledit copolymère, et plus particulièrement **en ce qu'**elle contient de 0,05 % à 5 % en poids sec dudit copolymère par rapport au poids sec des charges et/ou pigments, et plus particulièrement **en ce qu'**elle contient de 0,1 % à 2,5 % en poids sec dudit copolymère par rapport au poids sec des charges et/ou pigments.

10. Suspension aqueuse de matières minérales dispersées selon la revendication 9 **caractérisée en ce que** la matière minérale est choisie parmi le carbonate de calcium, les dolomies, le kaolin, le kaolin calciné, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane; et est préférentiellement du carbonate de calcium tel que le carbonate de calcium naturel choisi parmi le marbre, la calcite, la craie ou leurs mélanges.

11. Procédé de broyage en suspension aqueuse de matières minérales **caractérisé en ce que** l'on utilise le copolymère selon l'une des revendications 1 à 5.

12. Procédé de broyage en suspension aqueuse de matières minérales selon la revendication 11 **caractérisé en ce que** l'on utilise de 0,05 % à 5 % en poids sec dudit copolymère par rapport au poids sec des charges et/ou pigments, et plus particulièrement **en ce qu'**on utilise de 0,1 % à 2,5 % en poids sec dudit copolymère par rapport au poids sec des charges et/ou pigments.

13. Procédé de broyage en suspension aqueuse de matières minérales selon l'une des revendications 11 ou 12 **caractérisé en ce que** la matière minérale est choisie parmi le carbonate de calcium, les dolomies, le kaolin, le kaolin calciné, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est préférentiellement du carbonate de calcium tel que le carbonate de calcium naturel choisi parmi le marbre, la calcite, la craie ou leurs mélanges.

14. Suspension aqueuse de matières minérales broyée **caractérisée en ce qu'**elle contient ledit copolymère, et plus particulièrement **en ce qu'**elle contient de 0,05 % à 5 % en poids sec dudit copolymère par rapport au poids sec des charges et/ou pigments, et plus particulièrement **en ce qu'**elle contient de 0,1 % à 2,5 % en poids sec dudit copolymère par rapport au poids sec des charges et/ou pigments.

15. Suspension aqueuse de matières minérales broyées selon la revendication 14 **caractérisée en ce que** la matière minérale est choisie parmi le carbonate de calcium, les dolomies, le kaolin, le kaolin calciné, le talc, le gypse, l'oxyde de titane, le blanc satin ou encore le trihydroxyde d'aluminium, le mica et le mélange de ces charges entre elles, comme les mélanges talc-carbonate de calcium, carbonate de calcium-kaolin, ou encore les mélanges de carbonate de calcium avec le trihydroxyde d'aluminium, ou encore les mélanges avec des fibres synthétiques ou naturelles ou encore les co-structures des minéraux comme les co-structures talc-carbonate de calcium ou talc-dioxyde de titane, et est préférentiellement du carbonate de calcium tel que le carbonate de calcium naturel choisi parmi le marbre, la calcite, la craie ou leurs mélanges.

16. Utilisation de la suspension aqueuse de matières minérales selon l'une quelconque des revendications 9 et 10 ou 14 et 15 dans le domaine papetier et plus particulièrement dans le couchage du papier.

17. Procédé de fabrication de sauce de couchage **caractérisé en ce que** l'on utilise le copolymère selon l'une quelconque des revendications 1 à 5.

18. Procédé de fabrication de sauce de couchage selon la revendication 17 **caractérisé en ce que** l'on utilise de 0,05 % à 5 % en poids sec dudit copolymère par rapport au poids sec des matières minérales, et plus particulièrement **en ce qu'**on utilise de 0,1 % à 2,5 % en poids sec dudit copolymère par rapport au poids sec des matières minérales.

19. Sauce de couchage **caractérisée en ce qu'**elle contient ledit copolymère, et plus particulièrement **en ce qu'**elle contient de 0,05 % à 5 % en poids sec dudit copolymère par rapport au poids sec total des matières minérales, et encore plus particulièrement 0,1 % à 2,5 % en poids sec dudit copolymère par rapport au poids sec total des matières minérales.

20. Papier couché **caractérisé en ce qu'**il contient le copolymère selon l'une quelconque des revendications 1 à 5.

21. Composition de peinture **caractérisée en ce qu'**elle contient le copolymère selon l'une quelconque des revendications 1 à 5.

22. Composition de matière plastique **caractérisée en ce qu'**elle contient le copolymère selon l'une quelconque des revendications 1 à 5.

## Claims

1. Use of a weakly ionic and water-soluble copolymer as a brightness activator whatever the angle of view, i.e. an angle between 20° and 85°, and more particularly between 45° and 75°, **characterised in that** the said copolymer has at least one alkoxy or hydroxy polyalkylene glycol group grafted on to at least one unsaturated ethylenic monomer, and **in that** the said copolymer has an intrinsic viscosity of less than or equal to 100 ml/g determined according to the method known as the "Intrinsic visco. method", described in the Vollmert publication "Outlines of macromolecular chemistry" volume III, Vollmert Verlag, Karlsrube 1985, and by use of a bipermuted water solution and a capillary tube defined by norm DIN 53101/0a, of constant 0.005 and of diameter equal to 0.53 mm.

2. Use of a weakly ionic and water-soluble copolymer as a brightness activator, whatever the angle of view, according to claim 1, **characterised in that** the said copolymer is comprised of at least one monomer of formula (I): 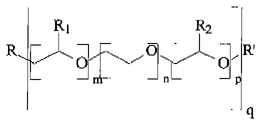 where:
- m and p represent a number of alkylene oxide units of less than or equal to 150,
- n represents a number of ethylene oxide units of less than or equal to 150,
- q represents a whole number at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable group, belonging to the group of vinylics, or to the group of acrylic, methacrylic, maleic, itaconic, crotonic or vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonate radical having 1 to 40 atoms of carbon, and represents preferentially a hydrocarbonate radical having 1 to 12 carbon atoms, and very preferentially a hydrocarbonate radical having 1 to 4 carbon atoms,
and **in that** the said copolymer has an intrinsic viscosity less than or equal to 100 ml/g determined according to the method known as the "intrinsic visco method".

3. Use of a weakly ionic and water-soluble copolymer as a brightness activator whatever the angle of view, according to one of the claims 1 or 2, **characterised in that** the said copolymer consists:
a) of at least one anionic monomer with a carboxylic or dicarboxylic or phosphoric or sulphonic group, or their blends,
b) of at least one non-ionic monomer, where the non-ionic monomer consists of at least one monomer of formula (I): 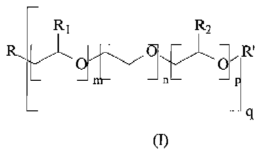 where:
- m and p represent a number of alkylene oxide units of less than or equal to 150,
- n represents a number of ethylene oxide units of less than or equal to 150,
- q represents a whole number at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable group, belonging to the group of vinylics, or to the group of acrylic, methacrylic, maleic, itaconic, crotonic or vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonate radical having 1 to 40 atoms of carbon, and represents preferentially a hydrocarbonate radical having 1 to 12 carbon atoms, and very preferentially a hydrocarbonate radical having 1 to 4 carbon atoms.
or a blend of several monomers of formula (I),
where the total proportions of the constituents a) and b) are equal to 100%,
and **in that** the said copolymer has an intrinsic viscosity less than or equal to 100 ml/g determined according to the method known as the "intrinsic visco. method".

4. Use of a weakly ionic and water-soluble copolymer as a brightness activator whatever the angle of view, according to one of the claims 1 or 3, **characterised in that** the said copolymer consists, expressed by weight:
a) of between 2% and 95%, and even more particularly between 5% and 90%, of at least one anionic monomer with ethylenic unsaturation and with a monocarboxylic group chosen from among the ethylenic unsaturation monomers and with a monocarboxylic group such as acrylic or methacrylic acid, or again the diacid hemiesters such as the C₁ to C₄ monoesters of maleic or itaconic acids, or their blends, or with a dicarboxylic group chosen from among the monomers with ethylenic unsaturation and a dicarboxylic group such as crotonic, isocrotonic, cinnamic, itaconic or maleic acid, or again the anhydrides of carboxylic acids, such as maleic anhydride, or with a sulphonic group chosen from among the monomers with ethylenic unsaturation and with a sulphonic group such as acrylamido-methyl-propane-sulphonic acid, sodium methallylsulphonate, vinyl sulphonic acid and styrene sulphonic acid, or again with a phosphoric group chosen from among the monomers with ethylenic unsaturation and with a phosphoric group such as vinyl phosphoric acid, ethylene glycol methacrylate phosphate, propylene glycol methacrylate phosphate, ethylene glycol acrylate phosphate, propylene glycol acrylate phosphate and their ethoxylates, or again with a phosphonic group chosen from among the monomers with ethylenic unsaturation and with a phosphonic group such as vinyl phosphonic acid, or their blends,
b) of between 2 and 95%, and more particularly between 5% and 90%, of at least one monomer with non-ionic ethylenic unsaturation of formula (I): 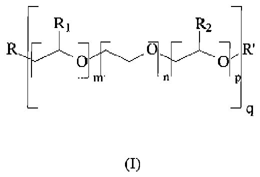 where:
- m and p represent a number of alkylene oxide units of less than or equal to 150,
- n represents a number of ethylene oxide units of less than or equal to 150,
- q represents a whole number at least equal to 1 and such that 5 ≤ (m+n+p)q ≤ 150, and preferentially such that 15 ≤ (m+n+p)q ≤ 120,
- R₁ represents hydrogen or the methyl or ethyl radical,
- R₂ represents hydrogen or the methyl or ethyl radical,
- R represents a radical containing an unsaturated polymerisable function, belonging to the group of vinylics, or to the group of acrylic, methacrylic, maleic, itaconic, crotonic or vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonate radical having 1 to 40 atoms of carbon, and represents preferentially a hydrocarbonate radical having 1 to 12 carbon atoms, and very preferentially a hydrocarbonate radical having 1 to 4 carbon atoms.
or a blend of several monomers of formula (I),
where the total proportions of the constituents a) and b) are equal to 100% and **in that** the said copolymer has an intrinsic viscosity less than or equal to 100 ml/g determined according to the method known as the "intrinsic visco. method".

5. Use of a weakly ionic and water-soluble copolymer as a brightness activator, whatever the angle of view, according to one of the claims 1 to 4, **characterised in that** the said copolymer is in its acid form or partially or totally neutralised by one or more neutralisation agents having a monovalent neutralising group or having a polyvalent neutralising group such as, for the monovalent group, those chosen from the group constituted by the alkaline cations, in particular sodium, potassium, lithium, ammonium or the primary, secondary or tertiary aliphatic and/or cyclic amines, such as stearylamine, the ethanolamines (mono-, di-, triethanolamine), mono- and diethylamine, cyclohexylamine, methylcyclohexylamine, amino methyl propanol, morpholine, or again, for the polyvalent group, those chosen from the group constituted by the alkaline earth divalent cations, in particular magnesium and calcium, or again zinc, and also by the trivalent cations, including in particular aluminium, or again by certain cations of higher valency.

6. A process for dispersal in aqueous suspension of mineral matter **characterised in that** the copolymer according to one of the claims 1 to 5 is used.

7. A process for dispersal in aqueous suspension of mineral matter according to claim 6 **characterised in that** from 0.05% to 5% by dry weight of the said copolymer relative to the dry weight of the fillers and/or pigments is used, and more particularly in that from 0.1% to 2.5% by dry weight of the said copolymer relative to the dry weight of the fillers and/or pigments is used.

8. A process for dispersal in aqueous suspension of mineral matter according to one of the claims 6 or 7 **characterised in that** the mineral matter is chosen from among calcium carbonate, the dolomites, kaolin, calcinated kaolin, talc, gypsum, titanium oxide, satin white or again aluminium trihydroxide, mica and a blend of these fillers, such as talc-calcium carbonate or calcium carbonate-kaolin blends, or again blends of calcium carbonate with aluminium trihydroxide, or again blends with synthetic or natural fibres, or again mineral co-structures such as talc-calcium carbonate or talc-titanium dioxide co-structures, and is preferentially calcium carbonate, such as natural calcium carbonate chosen from among marble, calcite, chalk or their blends.

9. An aqueous suspension of dispersed mineral matter **characterised in that** it contains the said copolymer, and more particularly **in that** it contains from 0.05% to 5% by dry weight of the said copolymer relative to the dry weight of the fillers and/or pigments, and more particularly **in that** it contains from 0.1 % to 2.5% by dry weight of the said copolymer relative to the dry weight of the fillers and/or pigments.

10. An aqueous suspension of mineral matter dispersed according to claim 9 **characterised in that** the mineral matter is chosen from among calcium carbonate, the dolomites, kaolin, calcinated kaolin, talc, gypsum, titanium oxide, satin white or again aluminium trihydroxide, mica and a blend of these fillers, such as talc-calcium carbonate blends, calcium carbonate-kaolin blends or again blends of calcium carbonate with aluminium trihydroxide, or again blends with synthetic or natural fibres, or again mineral co-structures such as talc-calcium carbonate or talc-titanium dioxide co-structures, and is preferentially calcium carbonate, such as natural calcium carbonate chosen from among marble, calcite, chalk or their blends.

11. A process for grinding in aqueous suspension of mineral matter **characterised in that** the copolymer is used according to one of the claims 1 to 5.

12. A process for grinding in aqueous suspension of mineral matter according to claim 11 **characterised in that** from 0.05% to 5% by dry weight of the said copolymer relative to the dry weight of the fillers and/or pigments is used, and more particularly in that from 0.1% to 2.5% by dry weight of the said copolymer relative to the dry weight of the fillers and/or pigments is used.

13. A process for grinding in aqueous suspension of mineral matter according to one of the claims 11 or 12 **characterised in that** the mineral matter is chosen from among calcium carbonate, the dolomites, kaolin, calcinated kaolin, talc, gypsum, titanium oxide, satin white or again aluminium trihydroxide, mica and a blend of these fillers, such as talc-calcium carbonate blends, calcium carbonate-kaolin blends or again blends of calcium carbonate with aluminium trihydroxide, or again blends with synthetic or natural fibres, or again mineral co-structures such as talc-calcium carbonate or talc-titanium dioxide co-structures, and is preferentially calcium carbonate, such as natural calcium carbonate chosen from among marble, calcite, chalk or their blends.

14. An aqueous suspension of ground mineral matter **characterised in that** it contains the said copolymer, and more particularly **in that** it contains from 0.05% to 5% by dry weight of the said copolymer relative to the dry weight of the fillers and/or pigments, and more particularly **in that** it contains from 0.1% to 2.5% by dry weight of the said copolymer relative to the dry weight of the fillers and/or pigments.

15. An aqueous suspension of mineral matter ground according to claim 14 **characterised in that** the mineral matter is chosen from among calcium carbonate, the dolomites, kaolin, calcinated kaolin, talc, gypsum, titanium oxide, satin white or again aluminium trihydroxide, mica and a blend of these fillers, such as talc-calcium carbonate blends, calcium carbonate-kaolin blends or again blends of calcium carbonate with aluminium trihydroxide, or again blends with synthetic or natural fibres, or again mineral co-structures such as talc-calcium carbonate or talc-titanium dioxide co-structures, and is preferentially calcium carbonate, such as natural calcium carbonate chosen from among marble, calcite, chalk or their blends.

16. Use of the aqueous suspension of mineral matter according to any of the claims 9 and 10 or 14 and 15 in the paper field, and more particularly in paper coating.

17. A process for manufacture of paper coating **characterised in that** the copolymer according to any one of the claims I to 5 is used.

18. A process for manufacture of paper coating according to claim 17 **characterised in that** from 0.05% to 5% by dry weight of the said copolymer relative to the dry weight of the mineral matter is used, and more particularly **in that** from 0.1% to 2.5% by dry weight of the said copolymer relative to the dry weight of the mineral matter is used.

19. A paper coating **characterised in that** it contains the said copolymer, and more particularly **in that** it contains from 0.05% to 5% by dry weight of the said copolymer relative to the total dry weight of the mineral matter, and even more particularly 0.1% to 2.5% by dry weight of the said copolymer relative to the total dry weight of mineral matter.

20. Coated paper **characterised in that** it contains the copolymer according to any one of the claims 1 to 5.

21. A paint composition **characterised in that** it contains the copolymer according to any one of the claims 1 to 5.

22. A plastic composition **characterised in that** it contains the copolymer according to any one of the claims 1 to 5.

## Patentansprüche

1. Verwendung eines schwach ionischen und wasserlöslichen Co-Polymers als Glanz aktivator, aus was für auch immer einem Blickwinkel, z.B. einem Winkel zwischen 20° und 85°, vorzugsweise zwischen 45° und 75°, **dadurch gekennzeichnet dass** das Co-Polymer mindestens eine Alkoxy- oder Hydroxypolyalkylenglykol-Gruppe auf mindestens einem ethylenisch ungesättigten Monomer gepfropft hat, und dass das Co-Polymer eine intrinsische Viskosität von weniger als oder gleich 100 ml/g aufweist, bestimmt nach der Methode bekannt als "Intrinsische Visco. Methode", beschrieben in der Vollmert Publikation "Outlines of macromolecular chemistry" Band III, Vollmert Verlag, Karlsruhe 1985, und unter Verwendung einer zweifach ionisch ausgetauschter Wasser Lösung und einem kapillar Rohr definiert gemäss der Norm DIN 53101/0a, mit einer Konstanten 0.005 und einem Durchmesser gleich 0.53 mm.

2. Verwendung eines schwach ionischen und wasserlöslichen Co-Polymers als Glanz aktivator, aus was für auch immer einem Blickwinkel gemäss Anspruch 1 **dadurch gekennzeichnet, dass** das besagte Co-Polymer sich aus mindestens einem Monomer der Formel (I): 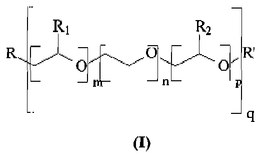 zusammensetzt, in welcher:
- m und p eine Anzahl von Alkylenoxid Einheiten von weniger oder gleich 150 ausmachen
- n eine Anzahl von Ethylenoxid Einheiten von weniger der gleich 150 ausmacht,
- q eine ganze Zahl von wenigstens gleich 1 darstellt in der art, dass 5 ≤ (m+n+p)q ≤ 150, und vorzugsweise in der art, dass 15 ≤ (m+n+p)q ≤ 120,
- R₁ stellt Wasserstoff oder das Methyl- bzw. Ethylradikal dar,
- R₂ stellt Wasserstoff oder das Methyl- bzw. Ethylradikal dar,
- R stellt ein Radikal mit einer polymerisierbaren, ungesättigten Funktion dar, das zur Gruppe der Vinyle, oder zu der Gruppe der Acryl-, Methacryl-, Malein-, Itacon-, Croton-, oder Vinlyphthal-Ester, oder zu der Gruppe der ungesättigten Urethane, wie Acrylurethan, Metharcrylurethan, α-α'-Dimethyl-isopropyl-Benzylurethan, Allylurethan, oder zu der Gruppe der substituierten oder nicht substituierten Allyl- oder Vinyl-ether oder wiederum zu der Gruppe der ethylenisch ungesättigten Amiden oder Imiden gehört.
- R' stellt Wasserstoff oder ein Kohlenwasserstoffradikal mit 1 bis 40 Kohlenstoffen, und vorzugsweise ein Kohlenwasserstoffradikal mit 1 bis 12 Kohlenstoffen, und mehr bevorzugt ein Kohlenwasserstoffradikal mit 1 bis 4 Kohlenstoffen dar,
und wobei das besagte Co-Polymer eine intrinsische Viskosität von weniger oder gleich 100 ml/g aufweist, bestimmt nach der Methode bekannt als "Intrinsische Visco. Methode".

3. Verwendung eines schwach ionischen und wasserlöslichen Co-Polymers als Glanz aktivator, aus was für auch immer einem Blickwinkel gemäss einem der Ansprüche 1 oder 2, **dadurch gekennzeichnet, dass** das besagte Co-Polymer aus:
a) mindestens einem anionischen Monomer mit Carboxyl- oder Dicarboxyl- oder Phosphor- oder Sulfonsäurefunktion oder deren Gemische,
b) mindestens einem nicht-ionischen Monomer, wobei das nicht-ionische Monomer bestehend aus mindestens einem Monomer der Formel (I) 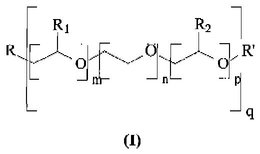 wobei:
- m und p eine Anzahl von Alkylenoxid Einheiten von weniger oder gleich 150 ausmachen
- n eine Anzahl von Ethylcnoxid Einheiten von weniger der gleich 150 ausmacht,
- q eine ganze Zahl von wenigstens gleich 1 darstellt in der art, dass 5 ≤ (m+n+p)q ≤ 150, und vorzugsweise in der art, dass 15 ≤ (m+n+p)q ≤ 120,
- R₁ stellt Wasserstoff oder das Methyl- bzw. Ethylradikal dar,
- R₂ stellt Wasserstoff oder das Methyl- bzw. Ethylradikal dar,
- R stellt ein Radikal mit einer polymerisierbaren, ungesättigten Funktion dar, das zur Gruppe der Vinyle, oder zu der Gruppe der Acryl-, Methacryl-, Malein-, Itacon-, Croton-, oder Vinlyphthal-Ester, oder zu der Gruppe der ungesättigten Urethane, wie Acrylurethan, Metharcrylurethan, α-α'-Dimethyl-isopropyl-Benzylurethan, Allylurethan, oder zu der Gruppe der substituierten oder nicht substituierten Allyl- oder Vinyl-ether oder wiederum zu der Gruppe der ethylenisch ungesättigten Amiden oder Imiden gehört.
- R' stellt Wasserstoff oder ein Kohlenwasserstoffradikal mit 1 bis 40 Kohlenstoffen, und vorzugsweise ein Kohlenwasserstoffradikal mit 1 bis 12 Kohlenstoffen, und mehr bevorzugt ein Kohlenwasserstoffradikal mit 1 bis 4 Kohlenstoffen dar,
oder ein Gemisch aus verschiedenen Monomeren der Formel (I) besteht,
wobei die Gesamtheit der proportionalen Bestandteile von a) und b) gleich 100% sind, und worin das besagte Co-Polymer eine intrinsische Viskosität von weniger oder gleich 100 ml/g aufweist, bestimmt nach der Methode bekannt als "Intrinsische Visco. Methode".

4. Verwendung eines schwach ionischen und wasserlöslichen Co-Polymers als Glanz aktivator, aus was für auch immer einem Blickwinkel gemäss einem der Ansprüche 1 oder 3, **dadurch gekennzeichnet, dass** das besagte Co-Polymer, ausgedrückt in Gewichtsteilen aus:
a) zwischen 2% und 95%, und im speziellen zwischen 5% und 90% aus mindestens einem anionischen Monomer mit ethylenischer Unsättigung und mit einer Monocarboxylgruppe ausgewählt aus den ethylenisch ungesättigten Monomeren und mit einer Monocarboxylgruppe wie Arcryl- oder Methacrylsäure, oder aber Disäuren halbester wie C1-C4 Monoester der Malein- oder Itaconsäuren, oder deren Gemisch, oder mit einer Dicarboxlygruppe ausgewählt aus den Monomeren mit ethylenischer Unsättigung und einer Dicarboxigruppe wie Croton-, Isocroton-, Itacon-, or Maleinsäure, oder aber Anhydride der Carboxylsäuren, wie Maleinsäureanhydrid, oder mit einer Sulfonsäuregruppe wie Acrylamido-Methyl-Propan-Sulfonsäure, Natrium-Methallylsulfonat, Vinylsulfonsäure und Styrolsulfonsäure, oder aber mit Phosphorfunktion ausgewählt aus ethlyenische Unsättigten Monomeren mit Phosphorfunktion wie Vinlyphosphorsäure, Ethylenglykol-Methacrylat-Phosphat, Propyleneglykol-Methacrylat-Phosphat, Ethylenglykol-Acrylat-Phosphat, Propyleneglykol-Acrylat-Phosphat und deren Ethoxylaten, oder aber mit Phosphorfunktion wie Vinylphosphorsäure, oder deren Gemische,
b) zwischen 2 und 95%, und genauer zwischen 5% und 90%, aus mindestens einem nicht-ionischen ethylenisch ungesättigtem Monomer der Formel (I): 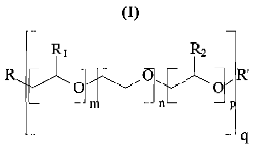 wobei:
- m und p eine Anzahl von Alkylenoxid Einheiten von weniger oder gleich 150 ausmachen
- n eine Anzahl von Ethylenoxid Einheiten von weniger der gleich 150 ausmacht,
- q eine ganze Zahl von wenigstens gleich 1 darstellt in der art, dass 5 ≤ (m+n+p)q ≤ 150, und vorzugsweise in der art, dass 15 ≤ (m+n+p)q ≤ 120,
- R₁ stellt Wasserstoff oder das Methyl- bzw. Ethylradikal dar,
- R₂ stellt Wasserstoff oder das Methyl- bzw. Ethylradikal dar,
- R stellt ein Radikal mit einer polymerisierbaren, ungesättigten Funktion dar, das zur Gruppe der Vinyle, oder zu der Gruppe der Acryl-, Methacryl-, Malein-, Itacon-, Croton-, oder Vinlyphthal-Ester, oder zu der Gruppe der ungesättigten Urethane, wie Acrylurethan, Metharcrylurethan, α-α'-Dimethyl-isopropyl-Benzylurethan, Allylurethan, oder zu der Gruppe der substituierten oder nicht substituierten Allyl- oder Vinyl-ether oder wiederum zu der Gruppe der ethylenisch ungesättigten Amiden oder Imiden gehört.
- R' stellt Wasserstoff oder ein Kohlenwasserstoffradikal mit 1 bis 40 Kohlenstoffen, und vorzugsweise ein Kohlenwasserstoffradikal mit 1 bis 12 Kohlenstoffen, und mehr bevorzugt ein Kohlenwasserstoffradikal mit 1 bis 4 Kohlenstoffen dar,
oder ein Gemisch aus verschiedenen Monomeren der Formel (I) besteht,
wobei die Gesamtheit der proportionalen Bestanteile von a) und b) gleich 100% sind, und worin das besagte Co-Polymer eine intrinsische Viskosität von weniger oder gleich 100 ml/g aufweist, bestimmt nach der Methode bekannt als "Intrinsische Visco. Methode".

5. Verwendung eines schwach ionischen und wasserlöslichen Co-Polymers als Glanz aktivator, aus was für auch immer einem Blickwinkel gemäss einem der Ansprüche 1 bis 4, **dadurch gekennzeichnet, dass** das besagte Co-Polymer in seiner Säureform, oder teilweise oder vollständig neutralisiert durch ein oder mehrere Neutralisierungsmittel vorliegt, welche eine einwertige neutralisierende Funktion oder eine mehrwertige neutralisierende Funktion haben können, z.B. für die einwertige Funktion eine aus der Gruppe der Alkalikationen, wie insbesondere Natrium, Kalium, Lithium, Ammonium oder aliphatische und/oder zyklische primäre, sekundäre oder terziäre Amine wie z.B. Stearylamin, Ethanolamin (Mono-, Di-, Triethanolamin), Mono-, Diethylamin, Cyclohexylamin, Methyl-cyclohexylamin, Aminomethylpropanol, oder auch die mehrwertige Funktion von Stoffen aus der Gruppe mit bivalenten Erdalkali-Kationen, wie insbesondere Magnesium, Calcium, oder auch Zink, ebenso wie die dreiwertigen Kationen, wie insbesondere Aluminium, oder aber einzelne, noch höherwertigere Kationen.

6. Ein Verfahren zur Dispergierung in wässriger Suspension vom mineralischem Material **dadurch gekennzeichnet, dass** es das Co-Polymer gemäss einem der Ansprüche 1 bis 5 verwendet.

7. Ein Verfahren zur Dispergierung in wässriger Suspension von mineralischem Material gemäss Anspruch 6 **dadurch gekennzeichnet, dass** von 0.05% bis 5% bezogen auf das trockene Gewicht des besagten Co-Polymers relativ zum trockenen Gewicht der Füllstoffe und/oder Pigmente, und im besonderen das 0.1% bis 2.5% bezogen auf das trockene Gewicht des besagten Co-Polymers relativ zum trockenen Gewicht der Füllstoffe und/oder Pigmente verwendet wird.

8. Ein Verfahren zur Dispergierung in wässriger Suspension von mineralischem Material gemäss einem der Ansprüche 6 oder 7 **dadurch gekennzeichnet, dass** das mineralische Material ausgewählt wird aus Calciumcarbonat, den Dolomiten, Kaolin, Talk, Gips, Titanoxid, Satinweiss, oder aber Aluminium Trihydroxind, Glimmer und Gemische dieser Füllstoffe, wie Talk-Calciumcarbonat oder Calciumcarbonat-Kaolin Gemische, oder aber Gemische aus Calciumcarbonat mit Aluminium Trihydroxid, oder aber Gemische mit synthetischen oder natürlichen Fasern, oder aber mineralische Co-Strukturen wie Takl-Calciumcarbonat oder Talk-Titandioxide Co-Strukturen, und bevorzugt Calciumcarbonat, wie natürliches Calciumcarbonate ausgewählt aus Marmor, Kalzit, Kalk oder deren Gemische.

9. Eine wässrige Suspension von dispergiertem mineralischen Material **dadurch gekennzeichnet dass** sie das besagte Co-Polymer und im besonderen das es 0.05% bis 5% bezogen auf das trockene Gewicht des besagten Co-Polymers relativ zum trockenen Gewicht der Füllstoffe und/oder Pigmente, und im besonderen das es 0.1% bis 2-5% bezogen auf das trockene Gewicht des besagten Co-Polymers relativ zum trockenen Gewicht der Füllstoffe und/oder Pigmente enthält.

10. Eine wässrige Suspension von dispergiertem mineralischen Material gemäss Anspruch 9 **dadurch gekennzeichnet, dass** das mineralische Material ausgewählt wird aus Calciumcarbonat, den Dolomiten, Kaolin, kalziniertem Kaolin, Talk, Gips, Titanoxid, Satinweiss, oder aber Aluminium Trihydroxind, Glimmer und Gemische dieser Füllstoffe, wie Talk-Calciumcarbonat oder Calciumcarbonat-Kaolin Gemische, oder aber Gemische aus Calciumcarbonat mit Aluminium Trihydroxid, oder aber Gemische mit synthetischen oder natürlichen Fasern, oder aber mineralische Co-Strukturen wie Talk-Calciumcarbonat oder Talk-Titandioxide Co-Strukturen, und bevorzugt Calciumcarbonat, wie natürliches Calciumcarbonate ausgewählt aus Marmor, Kalzit, Kalk oder deren Gemische.

11. Ein Verfahren zum Mahlen in wässriger Suspension von mineralischem Material, **dadurch gekennzeichnet, dass** das Co-Polymer aus einem der Ansprüche 1 bis 5 verwendet wird.

12. Ein Verfahren zum Mahlen in wässriger Suspension von mineralischem Material gemäss Anspruch 11 **dadurch gekennzeichnet, dass** von 0.05% bis 5% bezogen auf das trockene Gewicht des besagten Co-Polymers relativ zum trockenen Gewicht der Füllstoffe und/oder Pigmente, und im besonderen das 0.1% bis 2.5% bezogen auf das trockene Gewicht des besagten Co-Polymers relativ zum trockenen Gewicht der Füllstoffe und/oder Pigmente verwendet wird.

13. Ein Verfahren zum Mahlen in wässriger Suspension von mineralischem Material gemäss einem der Ansprüche 11 oder 12 **dadurch gekennzeichnet, dass** das mineralische Material ausgewählt wird aus Calciumcarbonat, den Dolomiten, Kaolin, kalziniertem Kaolin, Talk, Gips, Titanoxid, Satinweiss, oder aber Aluminium Trihydroxind, Glimmer und Gemische dieser Füllstoffe, wie Talk-Calciumcarbonat oder Calciumcarbonat-Kaolin Gemische, oder aber Gemische aus Calciumcarbonat mit Aluminium Trihydroxid, oder aber Gemische mit synthetischen oder natürlichen Fasern, oder aber mineralische Co-Strukturen wie Talk-Calciumcarbonat oder Talk-Titandioxide Co-Strukturen, und bevorzugt Calciumcarbonat, wie natürliches Calciumcarbonate ausgewählt aus Marmor, Calzit, Kalk oder deren Gemische.

14. Eine wässrige Suspension aus gemahlenem mineralischem Material **dadurch gekennzeichnet, dass** es das besagte Co-Polymer enthält, und im besonderen von 0.05% bis 5% bezogen auf das trockene Gewicht des besagten Co-Polymers relativ zum trockenen Gewicht der Füllstoffe und/oder Pigmente, und im besonderen das 0.1% bis 2.5% bezogen auf das trockene Gewicht des besagten Co-Polymers relativ zum trockenen Gewicht der Füllstoffe und/oder Pigmente verwendet wird.

15. Eine wässrige Suspension aus gemahlenem mineralischem Material gemäss Anspruch 14 **dadurch gekennzeichnet, dass** gekennzeichnet dass das mineralische Material ausgewählt wird aus Calciumcarbonat, den Dolomiten, Kaolin, kalziniertem Kaolin, Talk, Gips, Titanoxid, Satinweiss, oder aber Aluminium Trihydroxind, Glimmer und Gemische dieser Füllstoffe, wie Talk-Calciumcarbonat oder Calciumcarbonat-kaolin Gemische, oder aber Gemische aus Calciumcarbonat mit Aluminium Trihydroxid, oder aber Gemische mit synthetischen oder natürlichen Fasern, oder aber mineralische Co-Strukturen wie Talk-Calciumcarbonat oder Talk-Titandioxide Co-Strukturen, und bevorzugt Calciumcarbonat, wie natürliches Calciumcarbonate ausgewählt aus Marmor, Kalzit, Kalk oder deren Gemische.

16. Verwendung der wässrigen Suspension aus mineralischem Material gemäss den Ansprüchen 9 und 10 oder 14 und 15 auf dem Gebiet des Papiers, und im besonderen in der Papier Streichung.

17. Ein Verfahren zur Herstellung von Papierstreichmasse **dadurch gekennzeichnet, dass** das Co-Polymer gemäss einem der Ansprüche 1 bis 5 verwendet wird.

18. Ein Verfahren zur Herstellung von Papierstreichmasse gemäss Anspruch 17, **dadurch gekennzeichnet, dass** es das besagte Co-Polymer von 0.05% bis 5% bezogen auf das trockene Gewicht des besagten Co-Polymers relativ zum trockenen Gewicht der Füllstoffe und/oder Pigmente, und im besonderen das 0-1% bis 2.5% bezogen auf das trockene Gewicht des besagten Co-Polymers relativ zum trockenen Gewicht der Füllstoffe und/oder Pigmente enthält.

19. Eine Paperstreichmasse **dadurch gekennzeichnet, dass** es das besagte Co-Polymer enthält, und im besonderen von 0.05% bis 5% bezogen auf das trockene Gewicht des besagten Co-Polymers relativ zum trockenen Gewicht der Füllstoffe und/oder Pigmente, und im besonderen das 0,1% bis 2.5% bezogen auf das trockene Gewicht des besagten Co-Polymers relativ zum trockenen Gewicht der Füllstoffe und/oder Pigmente verwendet wird.

20. Gestrichenes Papier **dadurch gekennzeichnet dass** es das Co-Polymer gemäss einem der Ansprüche 1 bis 5 enthält.

21. Eine Farben Zusammensetzung **dadurch gekennzeichnet dass** es das Co-Polymer gemäss deinem der Ansprüche 1 bis 5 enthält.

22. Eine Kunststoff Zusammensetzung **dadurch gekennzeichnet, dass** es das Co-Polymer gemäss einem der Ansprüche 1 bis 5 enthält.
